# EUROPÄISCHE PATENTANMELDUNG

(11) **EP 4 644 353 A2**
(43) Veröffentlichungstag der Anmeldung: **05.11.2025**
(21) Anmeldenummer: 25197206.3
(22) Anmeldetag: 08.08.2018
(51) Int. Cl.: C07B 37/04

(54) **YLID-FUNKTIONALISIERTE PHOSPHANE ZUR VERWENDUNG IN METALLKOMPLEXEN UND DER HOMOGENEN KATALYSE**

(30) Priorität: 08.08.2017 DE 102017213817
(62) Teilanmeldung aus: 18755423.3
(71) Anmelder: Umicore AG & Co. KG, 63457 Hanau-Wolfgang (DE)
(72) Erfinder: Daeschlein-Gessner, Viktoria, 44625 Herne (DE); Scherpf, Thorsten, Calgary, 4410 (CA)
(74) Vertreter: Clauswitz, Kai-Uwe Wolfram

(57) **Zusammenfassung**

Die Erfindung betrifft Ylid-funktionalisierte Phosphanliganden, ihre Herstellung und Verwendung in Übergangsmetallverbindungen sowie deren Einsatz als Katalysatoren in organischen Reaktionen.

## Beschreibung

Die Erfindung betrifft Ylid-funktionalisierte Phosphanliganden, ihre Herstellung und Verwendung in Übergangsmetallverbindungen sowie deren Einsatz als Katalysatoren in organischen Reaktionen.

### Hintergrund der Erfindung

Die Synthese komplexer Moleküle ist häufig zentraler Bestandteil in der Feinchemie, bspw. um Produkte für die Herstellung von Pharmazeutika, Farbstoffen, Agrochemikalien, Materialien etc. zu gewinnen. Häufig sind hierzu katalytische Prozesse für Funktionalisierungsreaktionen erforderlich, wie z.B. Kupplungsreaktionen (Suzuki, Heck, Sonogashira etc.) oder Hydrofunktionalisierungen (Hydroaminierung, Hydrosilylierung etc.) zur Derivatisierung von Olefinen, Arylen oder Alkinen. Dabei werden die Katalysen entscheidend vom Metall und den eingesetzten Liganden beeinflusst.

Phosphane gehören zu den am häufigsten verwendeten Liganden in der Katalyse. Das Einstellen ihrer elektronischen und sterischen Parameter ist dabei entscheidend, um die Aktivität eines Katalysators zu steigern, Selektivitäten zu bestimmen und die Substratvielfalt erweitern zu können (A. C. Hillier et al., Organometallics, 22: 4322 (2003); H. Clavier et al. Chem. Commun., 46: 841 (2010); Z. L. Niemeyer, A. Milo, D. P. Hickey, M. S. Sigman, Nature Chem. 8: 610 (2016); C. A. Tolman, Chem. Rev.77, 313 (1977); G. Frenking, Organometallics, 28, 3901 (2009)). Die Variabilität von Phosphanen und das Manipulieren ihrer elektronischen und sterischen Eigenschaften begünstigt sie hierbei gegenüber vielen anderen Ligandensystemen. Phosphane werden daher in einer Vielzahl an Reaktionen, wie Palladium-katalysierten Kupplungsreaktionen (M. A. Wünsche et al., Angew. Chem. Int. Ed., 54, 11857 (2015); D. S. Surry et al., Angew. Chem. Int. Ed., 47, 6338 (2008); R. Martin et al., Acc. Chem. Res., 41, 1461 (2008); S. Kotha et al., Tetrahedron, 58, 9633 (2002)) oder Gold-katalysierten Hydroaminierungsreaktionen (Lavallo, V. et al.; Angew. Chem., Int. Ed., 52, 3172 (2013); E. Mizushima et al., Org. Lett., 5, 3349 (2003); Y. Wang et al., Nature. Commun., 1 (2014)) eingesetzt. Neue aktive Katalysatorsysteme basieren u.a. auf Adamantyl-funktionalisierte Phosphane (DE 10037961 A1, WO 02/10178 A1, L. Chen et al., J. Am. Chem. Soc., 138, 6392 (2016); C. A. Fleckenstein et al., Chem. Soc. Rev., 39, 694 (2010); K. A. Agnew-Francis et al., Adv. Synth. Catal., 358, 675 (2016)) oder Biaryl-Phosphanliganden (US 6307087 B1, D. S. Surry et al., Angew. Chem., 120, 6438 (2008); Angew. Chem. Int. Ed., 47, 6338 (2008); R. A. Altman et al., Nat. Protoc., 2, 3115 (2007); D. S. Surry et al., Chem. Sci., 2, 27 (2011); E. J. Cho et al., Science, 328, 1679 (2010); D. A. Watson et al., Science, 325, 1661 (2009)). Eine Übersicht über wichtige homogene Katalysen mit Phosphanliganden findet sich z.B. in B. Cornils, W. A. Hermann, Applied Homogenous Catalysis with Organometallic Compounds, Vol 12, VCH, Weinheim, 1996.

Das Ligandendesign ist hierbei in der Katalyse ausschlaggebend, um Reaktionen zu ermöglichen oder in gewünschte Richtungen lenken zu können. So ist bspw. häufig die Entwicklung neuer Phosphanliganden erforderlich, um kostengünstigere Ausgangssubstrate (z.B. Chloride anstelle von Iodiden), höhere Katalysatorproduktivitäten und -aktivitäten und eine breitere Substrat- und Reaktionsvielfalt zu realisieren.

### Kurze Beschreibung der Erfindung

### Aspekt (1): Phosphanliganden der Formeln YPR¹ R² (I), Y₂PR¹ (II) und Y₃P (III)

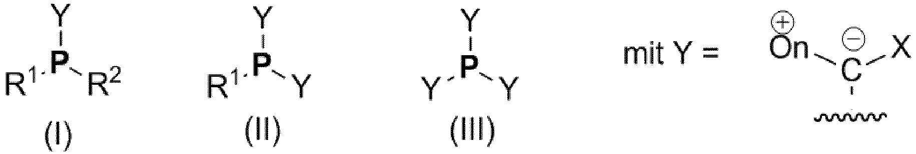

wobei
Y ein über das carbanionische Zentrum am Phosphoratom gebundener Ylid-Substituent darstellt, der Onium-Gruppen On und X-Gruppen aufweist,
On, unabhängig von den Onium-Gruppen in weiteren Ylid-Substituenten, ausgewählt ist aus Phosphoniumgruppen -P(R³R⁴R⁵), Ammoniumgruppen -N(R³R⁴R⁵), Sulfoxoniumgruppen -SOR³R⁴ und Sulfoniumgruppen -S(R³R⁴),
X, unabhängig von den X-Gruppen in weiteren Ylid-Substituenten, ausgewählt ist aus Wasserstoff, Alkyl-, Aryl-, Alkenyl- und Heteroarylgruppen, die unsubstituiert oder mit funktionellen Gruppen substituiert sein können, Silyl- (-SiR³R⁴R⁵), Sulfonyl- (-SO₂R³), Phosphoryl- (-P(O)R³R⁴, -P(S)R³R⁴, -P(NR³)R⁴R⁵₂), Cyano- (-CN), Alkoxy- (-OR³) und Aminogruppen (-NR³R⁴), und
R¹, R², R³, R⁴ und R⁵, soweit vorhanden, unabhängig voneinander ausgewählt sind aus Alkyl-, Aryl- und Heteroarylgruppen, die unsubstituiert oder mit funktionellen Gruppen substituiert sein können. Dies bevorzugt unter der Voraussetzung, dass eins oder beide von R¹ und R² nicht Methyl sind, wenn X Wasserstoff oder Trimethylsilyl ist und Z Trimethylphosphonium ist oder dass eins oder beide von R¹ und R² nicht Phenyl sind, wenn X p-toluylsulfonyl (-SO₂(p-toluyl)) und Z Triphenylphosphonium ist.

2. Phosphanliganden nach Punkt 1, wobei
   (i) die Alkylgruppen ausgewählt sind aus geradkettigen, verzweigten oder zyklischen C₁₋₁₀ Alkylgruppen, vorzugsweise aus C₁₋₆ Alkylgruppen oder C₄₋₁₀ Cycloalkylgruppen, die Arylgruppen ausgewählt sind aus C₆₋₁₄ Arylgruppen, vorzugsweise aus C₆₋₁₀ Arylgruppen, die Alkenylgruppen ausgewählt sind aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, und/oder
   (ii) die funktionelle Gruppen ausgewählt sind aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.
3. Phosphanliganden nach Punkt 1 oder 2, die die Formel (I) oder (II) 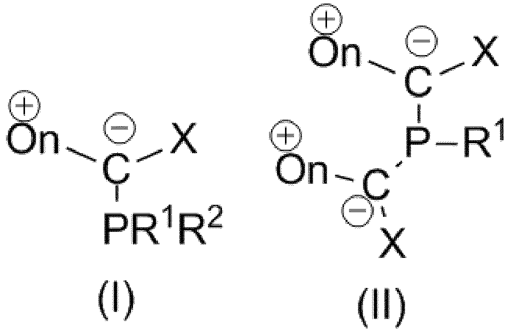 aufweisen, wobei On eine Phosphoniumgruppe -P(R³R⁴R⁵) wobei R³, R⁴ und R⁵ unabhängig voneinander ausgewählt sind aus der Gruppe bestehend aus C₁₋₆ Alkylgruppen, C₄₋₁₀ Cycloalkylgruppen, C₆₋₁₀ Arylgruppen, X ausgewählt ist aus der Gruppe bestehend aus geradkettigen, verzweigten oder zyklischen C₁₋₆ Alkylgruppen, C₆₋₁₀ Arylgruppen, einfach- oder mehrfach ungesättigten, geradkettigen, verzweigten oder zyklischen C₂₋₆ Alkenylgruppen, eine Trialkylsilyl- (-SiR³R⁴R⁵), Arylsulfonylgruppe (R¹²-SO₂R³) und R¹ und R² C₆₋₁₀ Arylgruppen oder C₁₋₆ Alkyl- - und Cycloalkylgruppen.
4. Phosphanliganden nach einem oder mehreren der vorstehenden Punkte, wobei R³, R⁴ und R⁵ unabhängig voneinander ausgewählt sind aus der Gruppe bestehend aus Methyl, Ethyl, Butyl, Cyclohexyl, Phenyl und deren Kombinationen.
5. Phosphanliganden nach einem oder mehreren der vorstehenden Punkte, wobei R³, R⁴ und R⁵ gleich sind und ausgewählt aus der Gruppe bestehend aus Methyl, Ethyl, Butyl, Cyclohexyl, Phenyl und deren Kombinationen, insbesondere Cyclohexyl und Phenyl.
6. Phosphanliganden nach einem oder mehreren der vorstehenden Punkte, wobei X ausgewählt ist aus der Gruppe bestehend aus Methyl, Ethyl, Cyclohexyl, Phenyl, p-Tolyl, Trimethylsilyl-, p-Tolylsulfonyl oder deren Kombinationen.
7. Phosphanliganden nach einem oder mehreren der vorstehenden Punkte, wobei R¹ und R² unabhängig voneinander ausgewählt sind aus der Gruppe bestehend aus Phenyl, Cyclohexyl, Methyl und deren Kombinationen.

### Aspekt (2):

8. Verfahren zur Herstellung der Phosphanliganden gemäß einem der Punkte 1 bis 3, umfassend
(a) die Umsetzung eines metallierten Ylids mit einem Halogenphosphan, einem Dihalogenphosphan oder Phosphortrichlorid;
(b) die Umsetzung eines Ylid-funktionalisierten Halogenphosphans oder Dihalogenphosphans mit einem metallorganischen Reagenz;
(c) die Phosphanylierung eines Oniumsalzes Phosphanylierung mit Halogenphosphanen in Gegenwart einer Base; oder
(d) die Deprotonierung eines α-Phosphanyl-substituierten Oniumsalzes mit einer Base.

### Aspekt (3):

9. Verwendung der Phosphanliganden nach einem der Punkte 1 bis 3 in der Synthese von Metallkomplexen oder Metallsalzen.
10. Verwendung nach Punkt 9, wobei die Metallkomplexe oder Metallsalze Edelmetall- oder Übergangsmetallkomplexe bzw. Edelmetall- oder Übergangsmetallverbindungen sind.
11. Verwendung nach Punkt 9 oder 10, wobei die Metall-, Edelmetall- oder Übergangsmetallkomplexe und -salze mit den Phosphanliganden gemäß einem der Punkte 1 bis 7 in der homogenen Katalyse eingesetzt werden.

### Aspekt (4):

12. Verwendung der Phosphanliganden nach einem der Punkte 1 bis 7 in Kombination mit Metall-, Edelmetall- oder Übergangsmetallkomplexen oder Metall-, Edelmetall- oder Übergangsmetallsalzen als Katalysatoren, wobei die Liganden *in situ* zu den Metall-, Edelmetall- oder Übergangsmetallprecursorverbindungen gegeben oder die isolierten Metall-, Edelmetall- oder Übergangsmetallkomplexe der Phosphanliganden gemäß Aspekt (3) eingesetzt werden.
13. Verwendung nach Punkt 9 bis 12, wobei die Metalle Platin, Palladium und Nickel, bevorzugt Palladium, verwendet werden.
14. Verwendung nach Punkt 9 bis 13, wobei die Metalle Kupfer, Silber und Gold, bevorzugt Gold, verwendet werden.
15. Verwendung nach Punkt 9 bis 14, wobei die Liganden
   (i) in katalytischen Hydrofunktionalisierungsreaktionen von Alkinen und Alkenen;
   (ii) in katalytischen Hydroaminierungsreaktionen von Alkinen und Alkenen;
   (iii) in katalytischen O-H-Additionsreaktionen an Alkinen und Alkenen;
   (iv) in katalytischen Kupplungsreaktionen;
   (v) in katalytischen Suzuki-Kupplungsreaktionen, insbesondere für die Darstellung von Biarylen;
   (vi) in katalytischen Kreuz-Kupplungsreaktionen, insbesondere C-N und C-O-Kupplungsreaktionen; und/oder
   (vii) in katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen;
   eingesetzt werden.

### Aspekt (5):

16. Metallkomplexe enthaltend einen Phosphanliganden der Formeln YPR¹ R² (I), Y₂PR¹ (II) und Y₃P (III) 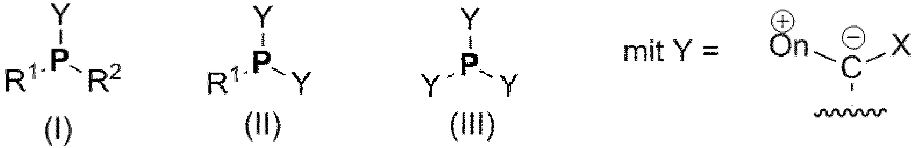 wobei
   Y ein über das carbanionische Zentrum am Phosphoratom gebundener Ylid-Substituent darstellt, der Onium-Gruppen On und X-Gruppen aufweist,
   On, unabhängig von den Onium-Gruppen in weiteren Ylid-Substituenten, ausgewählt ist aus Phosphoniumgruppen -P(R³R⁴R⁵), Ammoniumgruppen -N(R³R⁴R⁵), Sulfoxoniumgruppen -SOR³R⁴ und Sulfoniumgruppen -S(R³R⁴),
   X, unabhängig von den X-Gruppen in weiteren Ylid-Substituenten, ausgewählt ist aus Wasserstoff, Alkyl-, Aryl-, Alkenyl- und Heteroarylgruppen, die unsubstituiert oder mit funktionellen Gruppen substituiert sein können, Silyl- (-SiR³₃), Sulfonyl- (-SO₂R³), Phosphoryl- (-P(O)R³R⁴, -P(S)R³R⁴, -P(NR³)R⁴R⁵₂), Cyano- (-CN), Alkoxy- (-OR) und Aminogruppen (-NR₂), und
   R¹, R², R³, R⁴ und R⁵, soweit vorhanden, unabhängig voneinander ausgewählt sind aus Alkyl-, Aryl- und Heteroarylgruppen, die unsubstituiert oder mit funktionellen Gruppen substituiert sein können. Dies insbesondere unter der Voraussetzung, dass eins oder beide von R¹ und R² nicht Methyl sind, wenn X Wasserstoff oder Trimethylsilyl ist und Z Trimethylphosphonium ist oder dass eins oder beide von R¹ und R² nicht Phenyl sind, wenn X p-toluylsulfonyl (-SO₂(p-toluyl)) und Z Triphenylphosphonium ist.
17. Metallkomplexe nach Punkt 16, wobei (i) die Alkylgruppen ausgewählt sind aus geradkettigen, verzweigten oder zyklischen C₁₋₁₀ Alkylgruppen, vorzugsweise aus C₁₋₆ Alkylgruppen oder C₄₋₁₀ Cycloalkylgruppen, die Arylgruppen ausgewählt sind aus C₆₋₁₄ Arylgruppen, vorzugsweise aus C₆₋₁₀ Arylgruppen, die Alkenylgruppen ausgewählt sind aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, und/oder
   (ii) die funktionelle Gruppen ausgewählt sind aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.
18. Metallkomplexe nach Punkt 16 oder 17, wobei Phosphanliganden der Formeln (I) oder (II) 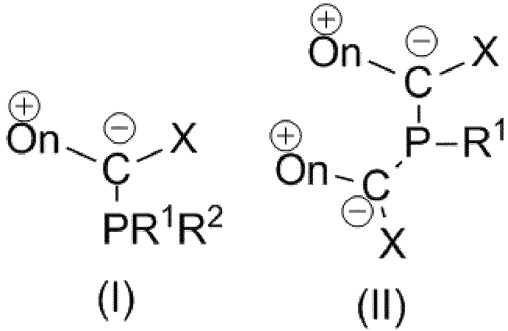 aufweisen, wobei On eine Phosphoniumgruppe -P(R³R⁴R⁵) wobei R³, R⁴ und R⁵ unabhängig voneinander ausgewählt sind aus der Gruppe bestehend aus C₁₋₆ Alkylgruppen, C₄₋₁₀ Cycloalkylgruppen, C₆₋₁₀ Arylgruppen, X ausgewählt ist aus der Gruppe bestehend aus geradkettigen, verzweigten oder zyklischen C₁₋₆ Alkylgruppen, C₆₋₁₀ Arylgruppen, einfach- oder mehrfach ungesättigten, geradkettigen, verzweigten oder zyklischen C₂₋₆ Alkenylgruppen, eine Trialkylsilyl- (-SiR³R⁴R⁵), Arylsulfonylgruppe (R¹²-SO₂R³) und R¹ und R² C₆₋₁₀ Arylgruppen oder C₁₋₆ Alkyl- und Cycloalkylgruppen.
19. Metallkomplexe nach einem oder mehreren der vorstehenden Punkte, wobei R³, R⁴ und R⁵ unabhängig voneinander ausgewählt sind aus der Gruppe bestehend aus Methyl, Ethyl, Butyl, Cyclohexyl, Phenyl und deren Kombinationen.
20. Metallkomplexe nach einem oder mehreren der vorstehenden Punkte, wobei R³, R⁴ und R⁵ gleich sind und ausgewählt aus der Gruppe bestehend aus Methyl, Ethyl, Butyl, Cyclohexyl, Phenyl und deren Kombinationen, insbesondere Cyclohexyl und Phenyl.
21. Metallkomplexe nach einem oder mehreren der vorstehenden Punkte, wobei X ausgewählt ist aus der Gruppe bestehend aus Methyl, Ethyl, Cyclohexyl, Phenyl, p-Tolyl, Trimethylsilyl-, p-Tolylsulfonyl oder deren Kombinationen.
22. Metallkomplexe nach einem oder mehreren der vorstehenden Punkte, wobei R¹ und R² unabhängig voneinander ausgewählt sind aus der Gruppe bestehend aus Phenyl, Cyclohexyl, Methyl, Tert.-Butyl und deren Kombinationen.
23. Metallkomplexe nach Punkt 18 bis 22, wobei der Komplex ein Palladium-allyl-Komplex ist und die folgende Struktur (V) oder (VI) aufweist: 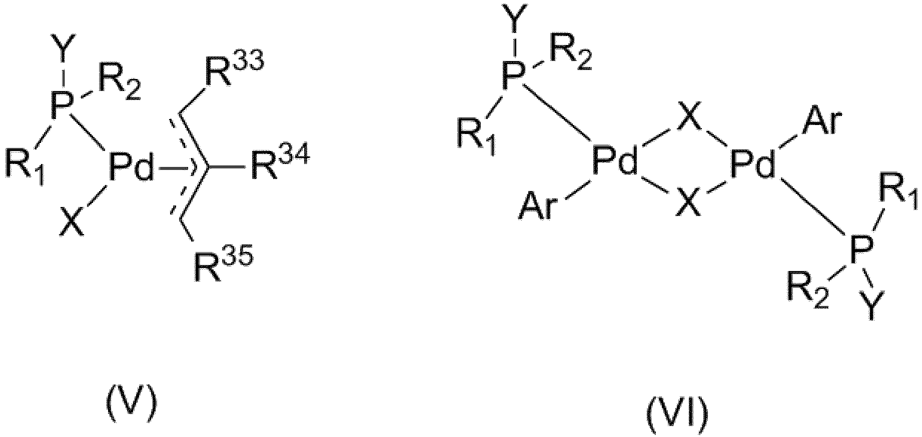
   wobei X ein Anion ist,
   Y, R¹, R², wie in den vorstehenden Punkten definiert sind,
   R³³, R³⁴ und R³⁵, unabhängig voneinander ausgewählt sind aus H, Alkyl-, Aryl- und Heteroarylgruppen, die unsubstituiert oder mit funktionellen Gruppen substituiert sein können; oder mindestens zwei von R³³, R³⁴ und R³⁵ einen carbocyclischen Ring mit 5 bis 14 Kohlenstoffatomen bilden können,
   Ar eine substituierte oder unsubstituierte, insbesondere eine substituierte Aryl-Gruppe darstellt.
24. Metallkomplexe nach Punkt 23, wobei R³³, R³⁴ und R³⁵, unabhängig voneinander ausgewählt sind aus geradkettigen, verzweigten oder zyklischen C₁₋₁₀ Alkylgruppen, vorzugsweise aus C₁₋₆ Alkylgruppen oder C₄₋₁₀ Cycloalkylgruppen, die Arylgruppen ausgewählt sind aus C₆₋₁₄ Arylgruppen, vorzugsweise aus C₆₋₁₀ Arylgruppen, die Alkenylgruppen ausgewählt sind aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, wobei die vorgenannten Gruppen alle mit funktionellen Gruppen substituiert sein können und/oder
   mindestens zwei von R³³, R³⁴ und R³⁵ einen carbocyclischen Ring bilden, der eine C₄₋C₁₀ Cycloalkylgruppe oder eine C₆₋₁₄ Arylgruppe ist, die mir einer oder mehreren funktionellen Gruppen substituiert sein können, und
   Ar ausgewählt sind aus C₆₋₁₄ Arylgruppen, vorzugsweise aus C₆₋₁₀ Arylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, wobei die vorgenannten Gruppen alle mit funktionellen Gruppen substituiert sein können, und
   die funktionelle Gruppen ausgewählt sind aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.
25. Metallkomplexe nach Punkt 23 oder 24, wobei X ausgewählt ist aus der Gruppe Halogen, Tosylat, Nosylat und Mesylat.
26. Metallkomplexe nach einem oder mehreren der vorstehenden Punkte, wobei X ausgewählt ist aus der Gruppe Fluor, Chlor, Brom, Iod, Tosylat, Nosylat und Mesylat und/oder Aryl ausgewählt ist aus Phenyl, m-Tolyl, p-Tolyl, o-Tolyl, Mesityl, 1,3-Diisopropylphenyl.
27. Verfahren zur Durchführung einer Kupplungsreaktion enthaltend die Schritte
   - Bereitstellen eines Reaktionsgemischs enthaltend mindestens Substrat, Kupplungspartner sowie einen Metallkomplex nach Punkt 16 bis 26 oder einen Metallkomplex enthaltend einen Liganden nach Punkt 1; und
   - Reagieren von Substrat mit dem Kupplungspartner in der Gegenwart des Metallkomplexes oder dessen Derivat, so dass ein Kupplungsprodukt entsteht.
28. Verfahren nach Punkt 27, wobei das Metall des Metallkomplexes ein Edelmetall und/oder ein Übergangsmetall ist.
29. Verfahren nach Punkt 27 oder 28, wobei das Metall des Metallkomplexes ein Metall der Gruppe 10 oder 11 des Periodensystems der Elemente ist.
30. Verfahren nach einem oder mehrerer Punkte 27 bis 29, wobei das Metall des Metallkomplexes ausgewählt ist aus der Gruppe bestehend aus Kupfer, Silber, Gold, Platin, Palladium, Nickel und deren Kombinationen ist.
31. Verfahren nach einem oder mehrerer Punkte 27 bis 30, wobei das Substrat eine substituierte aromatische Verbindung ist.
32. Verfahren nach Punkt 31, wobei die substituierte aromatische Verbindung eine aromatische oder heteroaromatische Verbindung ist.
33. Verfahren nach Punkt 31 oder 32, wobei die substituierte aromatische Verbindung substituiert ist mit einer Abgangsgruppe oder einer ungesättigten aliphatischen Gruppe oder einer Abgangsgruppe.
34. Verfahren nach Punkt 33, wobei die Abgangsgruppe ausgewählt ist aus der Gruppe bestehend aus Halogen, Tosylat, Nosylat und Mesylat und/oder die ungesättigte aliphatische Gruppe ausgewählt ist aus der Gruppe bestehend aus Alken, oder Alkin, insbesondere mit 2 bis 12, insbesondere 2 bis 8 Kohlenstoffatomen.
35. Verfahren nach einem oder mehreren der vorstehenden Punkte, wobei der Kupplungspartner eine organometallische Verbindung umfasst.
36. Verfahren nach Punkt 35, wobei die organometallische Verbindung ausgewählt ist aus der Gruppe bestehend aus organische Borverbindungen, organische Lithiumverbindungen, organische Zinkverbindungen, organische Lithiumverbindungen und Grignardverbindungen.
37. Verfahren nach Punkt 35 oder 36, wobei die organometallische Verbindung mindestens einen aromatischen Rest umfasst.
38. Verfahren nach Punkt 36, wobei die organometallische Verbindung mindestens einen ungesättigten aliphatischen Rest umfasst.
39. Verfahren nach Punkt 36, wobei die organometallische Verbindung mindestens einen gesättigten aliphatischen Rest umfasst.
40. Verfahren nach einem oder mehrerer Punkte 27 bis 39, wobei die Kopplungsreaktion ausgewählt sein können aus der Gruppe bestehend aus (i) katalytischen Hydrofunktionalisierungsreaktionen von Alkinen und Alkenen;
   (ii) katalytischen Hydroaminierungsreaktionen von Alkinen und Alkenen;
   (iii) katalytischen O-H-Additionsreaktionen an Alkinen und Alkenen;
   (iv) katalytischen Kupplungsreaktionen;
   (v) katalytischen Suzuki-Kupplungsreaktionen, insbesondere für die Darstellung von Biarylen;
   (vi) katalytischen Kreuz-Kupplungsreaktionen, insbesondere C-N und C-O-Kupplungsreaktionen; und/oder
   (vii) katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen.
41. Verwendung der Metallkomplexe der Punkte 16 bis 26 in der homogenene Katalyse, vorteilhaft in Kopplungsreaktionen, die ausgewählt sein können aus der Gruppe bestehend aus (i) katalytischen Hydrofunktionalisierungsreaktionen von Alkinen und Alkenen;
   (ii) katalytischen Hydroaminierungsreaktionen von Alkinen und Alkenen;
   (iii) katalytischen O-H-Additionsreaktionen an Alkinen und Alkenen;
   (iv) katalytischen Kupplungsreaktionen;
   (v) katalytischen Suzuki-Kupplungsreaktionen, insbesondere für die Darstellung von Biarylen;
   (vi) katalytischen Kreuz-Kupplungsreaktionen, insbesondere C-N und C-O-Kupplungsreaktionen; und/oder
   (vii) katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen.

### Detaillierte Beschreibung der Erfindung

Es wurde nun gefunden, dass die nachfolgend beschriebenen Ylid-funktionalisierten Phosphanliganden der Formeln (I), (II) und (III) mit einem carbanionischen Kohlenstoffzentrum in α-Stellung zum Phosphor und ihren Übergangsmetallkomplexen die gestellte Aufgabe erfüllen. Die Erfindung betrifft somit:
(1) Phosphanliganden der Formeln YPRR' (I), Y₂PR (II) und Y₃P (III) 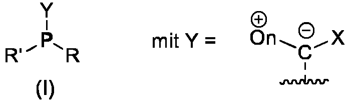 wobei
   Y ein über das carbanionische Zentrum am Phosphoratom gebundener Ylid-Substituent darstellt, der Onium-Gruppen On und X-Gruppen aufweist,
   On, unabhängig von den Onium-Gruppen in weiteren Ylid-Substituenten, ausgewählt ist aus Phosphoniumgruppen -PRR'₂, Ammoniumgruppen -NRR'₂, Sulfoxoniumgruppen -SOR₂ und Sulfoniumgruppen -SRR',
   X, unabhängig von den X-Gruppen in weiteren Ylid-Substituenten, ausgewählt ist aus Wasserstoff, Alkyl-, Aryl-, Alkenyl- und Heteroarylgruppen, die unsubstituiert oder mit funktionellen Gruppen substituiert sein können, Silyl- (-SiR₃), Sulfonyl- (-SO₂R), Phosphoryl- (-P(O)R₂, -P(S)R₂, -P(NR)R₂), Cyano- (-CN), Alkoxy- (-OR) und Aminogruppen (-NR₂), und
   R und R', soweit vorhanden, unabhängig voneinander ausgewählt sind aus Alkyl-, Aryl- und Heteroarylgruppen, die unsubstituiert oder mit funktionellen Gruppen substituiert sein können;
(2) ein Verfahren zur Herstellung der Phosphanliganden gemäß Aspekt (1), umfassend
   (a) die Umsetzung eines metallierten Ylids mit einem Halogenphosphan, einem Dihalogenphosphan oder Phosphortrichlorid,
   (b) die Umsetzung eines Ylid-funktionalisierten Halogenphosphans oder Dihalogenphosphans mit einem metallorganischen Reagenz,
   (c) die Phosphanylierung eines Oniumsalzes Phosphanylierung mit Halogenphosphanen in Gegenwart einer Base, oder
   (d) die Deprotonierung eines α-Phosphanyl-substituierten Oniumsalzes mit einer Base;
(3) die Verwendung der Phosphanliganden gemäß Aspekt (1) in der Synthese von Übergangsmetallkomplexen oder Übergangsmetallsalzen; und
(4) die Verwendung der Phosphanliganden gemäß Aspekt (1) in Kombination mit Übergangsmetallkomplexen oder Übergangsmetallsalzen als Katalysatoren, wobei die Liganden *in situ* zu den Übergangsmetallprecursorverbindungen gegeben oder die isolierten Übergangsmetallkomplexe der Phosphanliganden gemäß Aspekt (3) eingesetzt werden.

Aspekt (1) der Erfindung stellt Phosphanliganden der Formeln YPRR' (I), Y₂PR (II) und Y₃P (III) zur Verfügung.

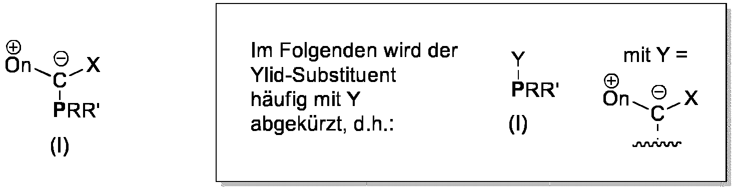

In der Formel stehen R und R' für Alkyl-, Aryl- und Heteroaromatenreste mit und ohne weiteren funktionellen Gruppen (z.B. Amine, Ether).

On beschreibt einen Substituenten mit einer positiven Ladung, wie z.B. Onium-Gruppen, v.a. Phosphoniumgruppen -PRR'₂, Ammonium -NRR'₂, Sulfoxoniumgruppen -SOR₂ oder Sulfoniumgruppen -SRR'. Das direkt am Phosphoratom gebundene Kohlenstoffatom trägt dabei formell eine negative Ladung.

X symbolisiert sowohl Alkyl-, Aryl- oder Alkenylgruppen mit und ohne weiteren funktionellen Gruppen, Heteroaromaten sowie Wasserstoff oder funktionelle Gruppen, wie Silyl-, Sulfonyl- (-SO₂R mit R = Alkyl, Aryl), Phosphoryl (-P(O)R₂, - P(S)R₂, -P(NR)R₂), -CN, Alkoxy (-OR), Amino (-NR₂), wobei der Rest R immer Alkyl- und Aryl-Reste einschließt.

Es ist dabei bevorzugt, dass die Alkylgruppen ausgewählt sind aus geradkettigen, verzweigten oder zyklischen C₁₋₁₀ Alkylgruppen, vorzugsweise aus C₁-₆ Alkylgruppen, die Arylgruppen ausgewählt sind aus C₆₋₁₄ Arylgruppen, vorzugsweise aus C₆₋₁₀ Arylgruppen, die Alkenylgruppen ausgewählt sind aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₄₋₁₄ Heteroarylgruppen, vorzugsweise aus C₆₋₁₀ Heteroarylgruppen, die 1 bis 5 Heteroatome ausgewählt aus B, N, O und S aufweisen. Weiterhin bevorzugt ist, dass, die funktionelle Gruppen ausgewählt sind aus Alkyl- (-R"), Perfluoro- (-CF₃, C₂F₅ usw.), Halogen- (-Hal), Hydroxy- (-OH), Cyano- (-CN), Alkoxy- (-OR"), Amino- (-NR"₂, - NHR", NH₂), Mercapto- (-SH, -SR", -SO₂R"), Phosphor- (-PR₃", (-P(O)R"₂, - P(S)R"₂, -P(NR)R"₂), Silyl- (-SiR"₃) und Nitrogruppen, wobei R", unabhängig von weiteren Resten R", ausgewählt ist aus C₁₋₆ Alkyl- und C₄₋₁₄ Arylresten.

Neben der einfachen Ylid-Substitution können die Phosphane auch zwei- und dreifach Ylid-substituiert werden, wodurch sich Phosphane mit der Formeln (II) Y₂PR und (III) Y₃P ergeben. Eine bevorzugte Ausführungsform von Aspekt (1) sind Phosphanliganden der Formel (I) 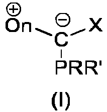 wobei On eine Triarylphosphoniumgruppe, insbesondere eine Triphenylphosphoniumgruppe ist, X eine Trialkylsilyl-, Cyano (-CN), Methyl- oder Arylsulfonylgruppe, insbesondere eine Trimelthylsilyl- oder p-Tolylsulfonylgruppe ist, und R und R' Aryl- oder Alkylgruppen, insbesondere Phenyl-, Cyclohexyl- oder Methylgruppen sind.

Aspekt (2) dieser Erfindung betrifft die Herstellung der erfindungsgemäßen Ylidfunktionalisieten Phosphanliganden. Sie können über zwei alternative Synthesewege dargestellt werden, was eine breite Variation des Substitutionsmusters erlaubt: Die Synthese gelingt entweder über ein α-metalliertes Ylid, das mit einem entsprechenden Chlorphosphan umgesetzt wird (Route A), oder über α-Deprotonierung eines α-phosphanyl-substituierten Phosphoniumsalzes (Route B).

Route A: Die für Route A erforderlichen α-metallierten Ylide lassen sich durch Deprotonierung von klassischen Yliden mit Metallbasen wie Organolithiumverbindungen oder Alkalimetallamiden darstellen (T. Scherpf et al., Angew. Chem. Int. Ed., 54, 8542 (2015); Bestmann, H. J. et al.; Angew. Chem. Int. Ed., 26, 79 (1987)). Ihre Umsetzung mit Chlorphosphanen des Typs RR'PCI (R,R' = Alkyl-, Arylreste) liefert auf direktem Weg das Ylid-funktionalisierte Phosphan. Bei Verwendung von Phosphortrichlorid lassen sich auch Ylid-funktionalisierte Chlorphosphane des Typs YPCl₂ darstellen, die in einem weiteren Schritt mit metallorganischen Reagenzien (bspw. Organolithium-, organomagnesium- und Organozink-Reagenzien) zum Alkyl/Aryl-Phosphan umgesetzt werden können. Umsetzungen von Chlorphosphanen mit Metallbasen sind beispielsweise beschrieben in Houben-Weyl, Methoden der organischen Chemie, 1963, Band XII, 1 S33. Die Verwendung von Phosphortrichlorid und Dichlorphosphanen ermöglicht auch den Zugang zu mehrfach Ylid-substituierten Phosphanen.

Route B: Die Darstellungsmethode B ist eine praktische Alternative zu Route A, die die Isolierung von empfindlichen, metallierten Intermediaten umgeht. Ausgehend von einem klassischen Onium-Salz erfolgt hier die Einführung der Phosphaneinheit durch Einsatz eines Halogenphosphans in Gegenwart einer Base. Bei Verwendung von einem Überschuss an Base gelingt auf direktem Weg die Bildung des Ylid-funktionalisierten Phosphans. Diese Methode erlaubt somit die Darstellung der Liganden ausgehend von leicht zugänglichen Ausgangssubstanzen bzw. von kommerziell erhältlichen Vorstufen.

Die neuen Phosphane werden mit Übergangsmetallverbindungen zu den entsprechenden Komplexen umgesetzt, wie bspw. mit Verbindungen der Metalle, Ni, Pd, Pt, Rh, Ir, Cu und Au. Die Komplexe können entweder als Feststoffe isoliert werden oder in situ generiert und für katalytische Anwendungen weiterverwendet werden. In den Komplexen erwiesen sich die Phosphanliganden als sehr starke Donorliganden, deren Donorfähigkeit jene klassischer Phosphanliganden übersteigt. Dies konnte mit Hilfe des Tolman Paramters (TEP), d.h. mittels Infrarot-Spektroskopie und der Bestimmung der CO-Streckschwingung in den entsprechenden Rh(acac)(CO)L Komplexen (mit L = Phosphanligand und acac = Acetylacetonato) nachgewiesen werden (C. A. Tolman, Chem. Rev.77, 313 (1977)).

Die Übergangsmetallkomplexe der Ylid-funktionalisierten Phosphanliganden werden in verschiedenen homogenkatalytischen Reaktionen eingesetzt, wie bspw. in Palladium-katalysierten Kupplungsreaktionen (z.B. C-C-, C-O, C-N-Kupplungen) und Gold-katalysierten Hydroaminierungsreaktionen. Dabei zeigen sie außergewöhnlich hohe Aktivitäten, die jene analoger Komplexe mit gewöhnlichen Phosphanliganden übersteigt. In der Gold-katalysierten Hydroaminierung von Alkinen werden so bereits bei Raumtemperatur hohe Umsätze beobachtet. Dabei werden z.T. TONs von über 10000 erreicht. Analoge Reaktionen mit anderen Phosphanliganden benötigten hier in der Regel höhere Reaktionstemperaturen oder weitere Zusätze von Additiven (D. Malhotra et al., Angew. Chem. Int. Ed., 53, 4456 (2014); E. Mizushima et al., Org. Lett., 5, 3349 (2003)). Zudem erwiesen sich die Systeme z.T. als äußerst robust gegenüber Wasser und Luftsauerstoff, so dass Katalysen auch ohne die Vorkehrung weiterer Schutzmaßnahmen durchgeführt werden konnten. Dies gilt beispielsweise für die Aukatalysierte Hydroaminierung von Phenylacetylen, die selbst in Gegenwart von Wasser keinen Abfall in der katalytischen Aktivität zeigte. Im Fall der Palladium-katalysierten Kupplungs- und Kreuzkupplungsreaktionen konnten vergleichsweise milde Reaktionsbedingungen angewandt und auch Kupplungen von Arylchloriden realisiert werden. Zum Beispiel konnten im Fall der C-N-Kupplungsreaktionen hohe Umsätze auch mit schwierigen Substraten bereits bei Raumtemperatur erreicht werden.

Die Erfindung betrifft daher Phosphanliganden der Formeln YPR¹ R² (I), Y₂PR¹ (II) und Y₃P (III) 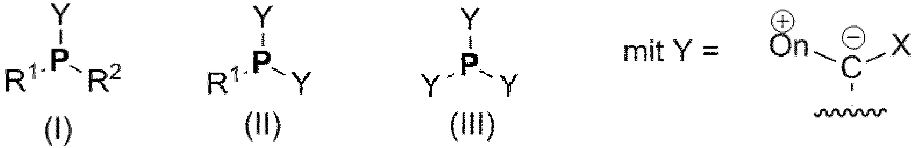 wobei
Y ein über das carbanionische Zentrum am Phosphoratom gebundener Ylid-Substituent darstellt, der Onium-Gruppen On und X-Gruppen aufweist,
On, unabhängig von den Onium-Gruppen in weiteren Ylid-Substituenten, ausgewählt ist aus Phosphoniumgruppen -P(R³R⁴R⁵), Ammoniumgruppen -N(R³R⁴R⁵), Sulfoxoniumgruppen -SOR³R⁴ und Sulfoniumgruppen -S(R³R⁴),
X, unabhängig von den X-Gruppen in weiteren Ylid-Substituenten, ausgewählt ist aus Wasserstoff, Alkyl-, Aryl-, Alkenyl- und Heteroarylgruppen, die unsubstituiert oder mit funktionellen Gruppen substituiert sein können, Silyl- (-SiR³R⁴R⁵), Sulfonyl- (-SO₂R³), Phosphoryl- (-P(O)R³R⁴, -P(S)R³R⁴, -P(NR³)R⁴R⁵₂), Cyano- (-CN), Alkoxy- (-OR³) und Aminogruppen (-NR³R⁴), und
R¹, R², R³, R⁴ und R⁵, soweit vorhanden, unabhängig voneinander ausgewählt sind aus Alkyl-, Aryl- und Heteroarylgruppen, die unsubstituiert oder mit funktionellen Gruppen substituiert sein können;
insbesondere unter der Voraussetzung, dass R¹ und R² von Methyl verschieden sind, wenn X Wasserstoff oder Trimethylsilyl ist und Z Trimethylphosphonium ist oder dass R¹ und R² von Phenyl verschieden sind, wenn X p-toluylsulfonyl (-SO₂(p-toluyl)) und Z Triphenylphosphonium ist.

Hierbei sind
(i) die Alkylgruppen ausgewählt sind aus geradkettigen, verzweigten oder zyklischen C₁₋₁₀ Alkylgruppen, vorzugsweise aus C₁₋₆ Alkylgruppen oder C₄₋₁₀ Cycloalkylgruppen, die Arylgruppen ausgewählt sind aus C₆₋₁₄ Arylgruppen, vorzugsweise aus C₆₋₁₀ Arylgruppen, die Alkenylgruppen ausgewählt sind aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, und/oder
(ii) die funktionelle Gruppen ausgewählt sind aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.

Eine spezifische Ausgestaltung betrifft Phosphanliganden, die die Formel (I) oder (II) 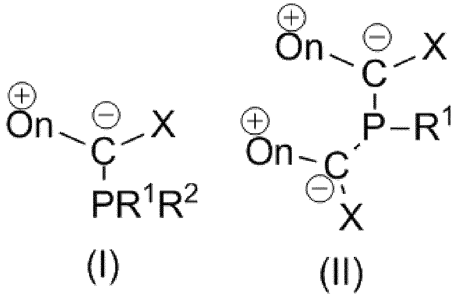 aufweisen, wobei On eine Phosphoniumgruppe -P(R³R⁴R⁵) wobei R³, R⁴ und R⁵ unabhängig voneinander ausgewählt sind aus der Gruppe bestehend aus C₁₋₆ Alkylgruppen, C₄₋₁₀ Cycloalkylgruppen, C₆₋₁₀ Arylgruppen, X ausgewählt ist aus der Gruppe bestehend aus geradkettigen, verzweigten oder zyklischen C₁₋₆ Alkylgruppen, C₆₋₁₀ Arylgruppen, einfach- oder mehrfach ungesättigten, geradkettigen, verzweigten oder zyklischen C₂₋₆ Alkenylgruppen, eine Trialkylsilyl- (-SiR³R⁴R⁵), Arylsulfonylgruppe (R¹²-SO₂R³) und R¹ und R² C₆₋₁₀ Arylgruppen oder C₁₋₆ Alkyl- - und Cycloalkylgruppen.

Es können R³, R⁴ und R⁵ unabhängig voneinander ausgewählt sein aus der Gruppe bestehend aus Methyl, Ethyl, Butyl, Cyclohexyl, Phenyl und deren Kombinationen. R³, R⁴ und R⁵ können gleich sein und ausgewählt aus der Gruppe bestehend aus Methyl, Ethyl, Butyl, Cyclohexyl, Phenyl und deren Kombinationen, insbesondere Cyclohexyl und Phenyl.

X kann ausgewählt sein aus der Gruppe bestehend aus Methyl, Ethyl, Cyclohexyl, Phenyl, p-Tolyl, Trimethylsilyl-, p-Tolylsulfonyl oder deren Kombinationen.

R¹ und R² können unabhängig voneinander ausgewählt sein aus der Gruppe bestehend aus Phenyl, Cyclohexyl, Methyl und deren Kombinationen.

Eine weitere Ausgestaltung betrifft ein Verfahren zur Herstellung der Phosphanliganden, umfassend
(a) die Umsetzung eines metallierten Ylids mit einem Halogenphosphan, einem Dihalogenphosphan oder Phosphortrichlorid;
(b) die Umsetzung eines Ylid-funktionalisierten Halogenphosphans oder Dihalogenphosphans mit einem metallorganischen Reagenz;
(c) die Phosphanylierung eines Oniumsalzes Phosphanylierung mit Halogenphosphanen in Gegenwart einer Base; oder
(d) die Deprotonierung eines α-Phosphanyl-substituierten Oniumsalzes mit einer Base.

Die Phosphanliganden können verwendet werden in der Synthese von Metallkomplexen oder Metallsalzen.

Diese können insbesondere Edelmetall- oder Übergangsmetallkomplexe bzw. Edelmetall- oder Übergangsmetallverbindungen sind. Es können insbesondere Metalle der Gruppe 10 oder 11 des Periodensystems der Elemente eingesetzt werden.

Die Metall-, Edelmetall- oder Übergangsmetallkomplexe und -salze mit den oben beschriebenen Phosphanliganden können in der homogenen Katalyse eingesetzt werden.

Insbeondere können in Kombination mit Metall-, Edelmetall- oder Übergangsmetallkomplexen oder Metall-, Edelmetall- oder Übergangsmetallsalzen als Katalysatoren, wobei die Liganden *in situ* zu den Metall-, Edelmetall- oder Übergangsmetallprecursorverbindungen gegeben oder die isolierten Metall-, Edelmetall- oder Übergangsmetallkomplexe der Phosphanliganden gemäß Aspekt (3) in der Synthese von Übergangsmetallkomplexen oder Übergangsmetallsalzen eingesetzt werden.

In einer Ausgestaltung können die Metalle Platin, Palladium und Nickel, bevorzugt Palladium, verwendet werden.

In einer weiteren Ausgestaltung können die Metalle Kupfer, Silber und Gold, bevorzugt Gold, verwendet werden.

In den obigen Verwendungen können die Liganden
(i) in katalytischen Hydrofunktionalisierungsreaktionen von Alkinen und Alkenen;
(ii) in katalytischen Hydroaminierungsreaktionen von Alkinen und Alkenen;
(iii) in katalytischen O-H-Additionsreaktionen an Alkinen und Alkenen;
(iv) in katalytischen Kupplungsreaktionen;
(v) in katalytischen Suzuki-Kupplungsreaktionen, insbesondere für die Darstellung von Biarylen;
(vi) in katalytischen Kreuz-Kupplungsreaktionen, insbesondere C-N und C-O-Kupplungsreaktionen; und/oder
(vii) in katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen;
eingesetzt werden.

Die Patentanmeldung betrifft insbesondere weiter Metallkomplexe enthaltend einen Phosphanliganden der Formeln YPR¹ R² (I), Y₂PR¹ (II) und Y₃P (III) 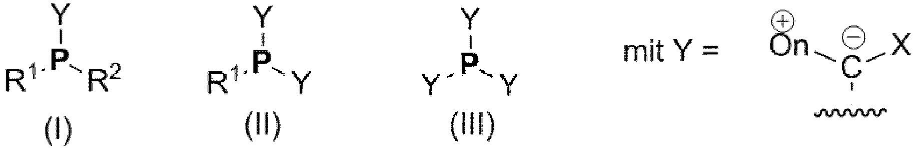 wobei
Y ein über das carbanionische Zentrum am Phosphoratom gebundener Ylid-Substituent darstellt, der Onium-Gruppen On und X-Gruppen aufweist,
On, unabhängig von den Onium-Gruppen in weiteren Ylid-Substituenten, ausgewählt ist aus Phosphoniumgruppen -P(R³R⁴R⁵), Ammoniumgruppen -N(R³R⁴R⁵), Sulfoxoniumgruppen -SOR³R⁴ und Sulfoniumgruppen -S(R³R⁴),
X, unabhängig von den X-Gruppen in weiteren Ylid-Substituenten, ausgewählt ist aus Wasserstoff, Alkyl-, Aryl-, Alkenyl- und Heteroarylgruppen, die unsubstituiert oder mit funktionellen Gruppen substituiert sein können, Silyl- (-SiR³₃), Sulfonyl- (-SO₂R³), Phosphoryl- (-P(O)R³R⁴, -P(S)R³R⁴, -P(NR³)R⁴R⁵₂), Cyano- (-CN), Alkoxy- (-OR) und Aminogruppen (-NR₂), und
R¹, R², R³, R⁴ und R⁵, soweit vorhanden, unabhängig voneinander ausgewählt sind aus Alkyl-, Aryl- und Heteroarylgruppen, die unsubstituiert oder mit funktionellen Gruppen substituiert sein können; vorteilhaft solche Komplexe wie oben beschrieben, unter der Voraussetzung, dass R¹ und R² von Methyl verschieden sind, wenn X Wasserstoff oder Trimethylsilyl ist und Z Trimethylphosphonium sein kann oder dass R¹ und R² von Phenyl verschieden sind, wenn X p-toluylsulfonyl (-SO₂(p-toluyl)) und Z Triphenylphosphonium ist.

Hierbei können die Alkylgruppen ausgewählt sein aus geradkettigen, verzweigten oder zyklischen C₁₋₁₀ Alkylgruppen, vorzugsweise aus C₁₋₆ Alkylgruppen oder C₄₋₁₀ Cycloalkylgruppen, die Arylgruppen ausgewählt sein aus C₆₋₁₄ Arylgruppen, vorzugsweise aus C₆₋₁₀ Arylgruppen, die Alkenylgruppen können ausgewählt sein aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, und/oder
(ii) die funktionelle Gruppen könne ausgewählt sein aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.

Die Metallkomplexe können insbesondere Edelmetall- oder Übergangsmetallkomplexe bzw. Edelmetall- oder Übergangsmetallverbindungen sind. Es können insbesondere Metalle der Gruppe 10 oder 11 des Periodensystems der Elemente eingesetzt werden.

In einer Ausgestaltung können die Metalle Platin, Palladium und Nickel, bevorzugt Palladium, verwendet werden.

In einer weiteren Ausgestaltung können die Metalle Kupfer, Silber und Gold, bevorzugt Gold, verwendet werden.

Vorteilhaft können dies Metallkomplexe sein, die Phosphanliganden der Formeln (I) oder (II) 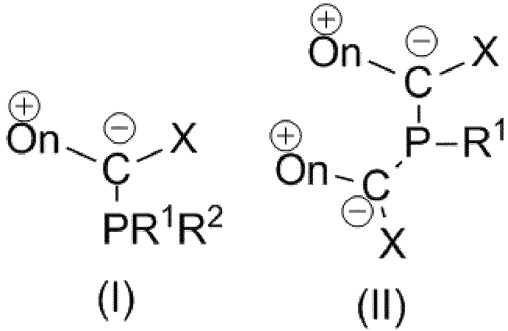
aufweisen, wobei On eine Phosphoniumgruppe -P(R³R⁴R⁵) wobei R³, R⁴ und R⁵ unabhängig voneinander ausgewählt sein können aus der Gruppe bestehend aus C₁₋₆ Alkylgruppen, C₄₋₁₀ Cycloalkylgruppen, C₆₋₁₀ Arylgruppen,
X ausgewählt sein kann aus der Gruppe bestehend aus geradkettigen, verzweigten oder zyklischen C₁₋₆ Alkylgruppen, C₆₋₁₀ Arylgruppen, einfach- oder mehrfach ungesättigten, geradkettigen, verzweigten oder zyklischen C₂₋₆ Alkenylgruppen, eine Trialkylsilyl- (-SiR³R⁴R⁵), Arylsulfonylgruppe (R¹²-SO₂R³) und
R¹ und R² C₆₋₁₀ Arylgruppen oder C₁₋₆ Alkyl- - und Cycloalkylgruppen
Insbesondere können R³, R⁴ und R⁵ unabhängig voneinander ausgewählt sind aus der Gruppe bestehend aus Methyl, Ethyl, Butyl, Cyclohexyl, Phenyl und deren Kombinationen, oder R³, R⁴ und R⁵ können gleich sein und ausgewählt aus der Gruppe bestehend aus Methyl, Ethyl, Butyl, Cyclohexyl, Phenyl und deren Kombinationen, insbesondere Cyclohexyl und Phenyl.

In den Metallkomplexen können X ausgewählt sein aus der Gruppe bestehend aus Methyl, Ethyl, Cyclohexyl, Phenyl, p-Tolyl, Trimethylsilyl-, p-Tolylsulfonyl oder deren Kombinationen.

Ebenso können R¹ und R² unabhängig voneinander ausgewählt sein aus der Gruppe bestehend aus Phenyl, Cyclohexyl, Methyl, Tert.-Butyl und deren Kombinationen.

Vorteilhafte Liganden können insbesondere Liganden der obigen Formeln (I) oder (II) sein mit den Substituenten gemäß folgenden Tabelle 1:

| Nr. | R1, R2 | On | X |
|---|---|---|---|
| 1 | Tert.-Butyl | PPh3 | Phenyl |
| 2 | Phenyl | PPh3 | Phenyl |
| 3 | Methyl | PPh3 | Phenyl |
| 4 | Cyclohexyl | PPh3 | Phenyl |
| 5 | Tert.-Butyl | PCy3 | Phenyl |
| 6 | Phenyl | PCy3 | Phenyl |
| 7 | Methyl | PCy3 | Phenyl |
| 8 | Cyclohexyl | PCy3 | Phenyl |
| 9 | Tert.-Butyl | PPh3 | Methyl |
| 10 | Phenyl | PPh3 | Methyl |
| 11 | Methyl | PPh3 | Methyl |
| 12 | Cyclohexyl | PPh3 | Methyl |
| 13 | Tert.-Butyl | PCy3 | Methyl |
| 14 | Phenyl | PCy3 | Methyl |
| 15 | Methyl | PCy3 | Methyl |
| 16 | Cyclohexyl | PCy3 | Methyl |
| 17 | Tert.-Butyl | PPh3 | Trimethylsilyl |
| 18 | Phenyl | PPh3 | Trimethylsilyl |
| 19 | Methyl | PPh3 | Trimethylsilyl |
| 20 | Cyclohexyl | PPh3 | Trimethylsilyl |
| 21 | Tert.-Butyl | PCy3 | Trimethylsilyl |
| 22 | Phenyl | PCy3 | Trimethylsilyl |
| 23 | Methyl | PCy3 | Trimethylsilyl |
| 24 | Cyclohexyl | PCy3 | Trimethylsilyl |
| 25 | Tert.-Butyl | PPh3 | Toluoysulfonyl SO2Tol |
| 26 | Phenyl | PPh3 | Toluoysulfonyl SO2Tol |
| 27 | Methyl | PPh3 | Toluoysulfonyl SO2Tol |
| 28 | Cyclohexyl | PPh3 | Toluoysulfonyl SO2Tol |
| 29 | Tert.-Butyl | PCy3 | Toluoysulfonyl SO2Tol |
| 30 | Phenyl | PCy3 | Toluoysulfonyl SO2Tol |
| 31 | Methyl | PCy3 | Toluoysulfonyl SO2Tol |
| 32 | Cyclohexyl | PCy3 | Toluoysulfonyl SO2Tol |

wobei PPh3 für Triphenylphosphin und PCy3 für Tricyclohexylphosphin stehen. Die Metallkomplexe können insbesondere Edelmetall- oder Übergangsmetallkomplexe bzw. Edelmetall- oder Übergangsmetallverbindungen sind. Es können insbesondere Metalle der Gruppe 10 oder 11 des Periodensystems der Elemente eingesetzt werden.

In einer Ausgestaltung können die Metalle Platin, Palladium und Nickel, bevorzugt Palladium, verwendet werden.

In einer weiteren Ausgestaltung können die Metalle Kupfer, Silber und Gold, bevorzugt Gold, verwendet werden.

Die Metallkomplexe können auch weitere Liganden aufweisen, wie neutrale Elektronendonorliganden, zum Beispiel Dibenzylidenaceton (DBA), Kohlenmonoxid CO, NHC-Liganden, Phosphine wie Triphenylphosphin oder Tricyclohexylphosphin und Amine, wie beispielsweise Triethylamin oder Tributylamin. Auch geladene Liganden wie Halogene, insbesondere Chlorid, Bromid und Iodid oder Pseudohalogenide Mesylat, Triflat, Acetat wie können vorhanden sein. Substituierte oder unsubstituierte Aryl- und Allylliganden können ebenfalls vorhanden sein wie auch Mono- oder Diolefine, die linear oder cyclisch sein können, wie zum Beispiel Cyclooctadien.

Vorteilhaft können die Metallkomplexe also zusätzlich insbesondere Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

Insbesondere können Metallkomplexe der folgenden Tabellen B bis G eingesetzt werden.

### Tabelle B

Tabelle B zeigt Platinkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

### Tabelle C

Tabelle C zeigt Palladiumkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

### Tabelle D

Tabelle D zeigt Nickelkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

### Tabelle E

Tabelle E zeigt Kupferkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

### Tabelle F

Tabelle F zeigt Silberkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

### Tabelle G

Tabelle G zeigt Goldkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

Die Metallkomplexe können auf an sich bekannte Weise erhalten werden, wie zum Beispiel durch Umsetzung von Metallsalzen oder Metallkomplexen, welche vorteilhaft bereits gewünschte weitere Liganden tragen (wie beispielsweise Nickeltetracarbonyl, (THT)AuCl (THT=Tetrahydrothiophen), Allylpalladium(II)chlorid-Dimer, Palladiumacetat, Palladium-chlorid oder Tris(Dibenzylidenaceton)-dipalladium(0) x Dibenzylidenaceton) mit einem oder mehreren Phosphanliganden, gegebenenfalls in einem geeigneten Lösemittel.

Die oben beschriebenen Metallkomplexe können in der homogenen Katalyse eingesetzt werden, insbesondere in Kupplungsreaktionen, wobei die Kopplungsreaktion ausgewählt sein kann aus der Gruppe bestehend aus
(i) katalytischen Hydrofunktionalisierungsreaktionen von Alkinen und Alkenen;
(ii) katalytischen Hydroaminierungsreaktionen von Alkinen und Alkenen;
(iii) katalytischen O-H-Additionsreaktionen an Alkinen und Alkenen;
(iv) katalytischen Kupplungsreaktionen;
(v) katalytischen Suzuki-Kupplungsreaktionen, insbesondere für die Darstellung von Biarylen;
(vi) katalytischen Kreuz-Kupplungsreaktionen, insbesondere C-N und C-O-Kupplungsreaktionen; und/oder
(vii) katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen

Außerdem können die Metallkomplexe ein Palladium-allyl-Komplexe der Struktur (V) oder Palladium-Aryl-Komplexe der Struktur (VI) sein: 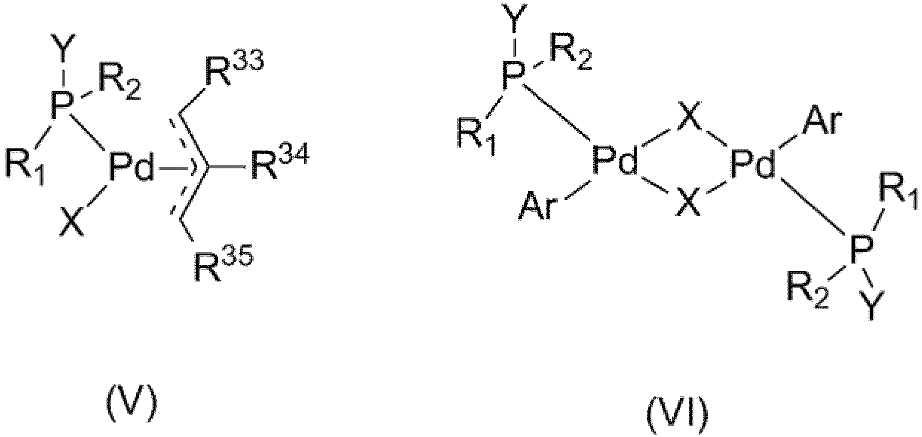
wobei X ein Anion ist,
Y, R¹, R², wie in den vorstehenden Punkten definiert sein können,
R³³, R³⁴ und R³⁵, unabhängig voneinander ausgewählt sein können aus H, Alkyl-, Aryl- und Heteroarylgruppen, die unsubstituiert oder mit funktionellen Gruppen substituiert sein können; oder mindestens zwei von R³³, R³⁴ und R³⁵ einen carbocyclischen Ring mit 5 bis 14 Kohlenstoffatomen bilden können,
Ar eine substituierte oder unsubstituierte, insbesondere eine substituierte Aryl-Gruppe darstellen kann.

Hierbei können wobei R³³, R³⁴ und R³⁵, unabhängig voneinander ausgewählt sein aus geradkettigen, verzweigten oder zyklischen C₁₋₁₀ Alkylgruppen, vorzugsweise aus C₁₋₆ Alkylgruppen oder C₄₋₁₀ Cycloalkylgruppen, die Arylgruppen ausgewählt sein aus C₆₋₁₄ Arylgruppen, vorzugsweise aus C₆₋₁₀ Arylgruppen, die Alkenylgruppen ausgewählt sein aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sein aus C₆₋₁₄ Heteroarylgruppen, vorzugsweise aus C₆₋₁₀ Heteroarylgruppen, die 1 bis 5 Heteroatome ausgewählt aus N, O und S aufweisen, wobei die vorgenannten Gruppen alle mit funktionellen Gruppen substituiert sein können und/oder
mindestens zwei von R³³, R³⁴ und R³⁵ einen carbocyclischen Ring bilden, der eine C₄₋₁₀ Cycloalkylgruppe oder eine C₆₋₁₄ Arylgruppe ist, die mit einer oder mehreren funktionellen Gruppen substituiert sein können, und
Ar kann ausgewählt sein aus C₆₋₁₄ Arylgruppen, vorzugsweise aus C₆₋₁₀ Arylgruppen, und die Heteroarylgruppen ausgewählt sein können aus C₆₋₁₄ Heteroarylgruppen, vorzugsweise aus C₆₋₁₀ Heteroarylgruppen, die 1 bis 5 Heteroatome ausgewählt aus N, O und S aufweisen können, wobei die vorgenannten Gruppen alle mit funktionellen Gruppen substituiert sein können, und
die funktionellen Gruppen ausgewählt sein können aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.

Insbesondere können X ausgewählt sein aus der Gruppe Halogen, Tosylat, Nosylat und Mesylat, spezifisch kann X ausgewählt sein aus der Gruppe Fluor, Chlor, Brom, Iod, Tosylat, Nosylat und Mesylat und/oder Aryl ausgewählt ist aus Phenyl, m-Tolyl, p-Tolyl, o-Tolyl, Mesityl, 1,3-Diisopropylphenyl.

Palladiumkomplexe, die mindestens einen der oben beschriebenen Phosphanliganden enthalten, insbesondere die beschriebenen Palladium-Allylkomplexe und Palladium-Arylkomplexe können in der homogenen Katalyse eingesetzt werden, insbesondere in Kupplungsreaktionen, wobei die Kopplungsreaktion ausgewählt sein kann aus der Gruppe bestehend aus
(i) katalytischen Hydrofunktionalisierungsreaktionen von Alkinen und Alkenen;
(ii) katalytischen Hydroaminierungsreaktionen von Alkinen und Alkenen;
(iii) katalytischen O-H-Additionsreaktionen an Alkinen und Alkenen;
(iv) katalytischen Kupplungsreaktionen;
(v) katalytischen Suzuki-Kupplungsreaktionen, insbesondere für die Darstellung von Biarylen;
(vi) katalytischen Kreuz-Kupplungsreaktionen, insbesondere C-N und C-O-Kupplungsreaktionen; und/oder
(vii) katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen.

Außerdem betrifft die Patentanmeldung ein Verfahren zur Durchführung einer Kupplungsreaktion enthaltend die Schritte
- Bereitstellen eines Reaktionsgemischs enthaltend mindestens Substrat, Kupplungspartner sowie mindestens einen der obigen Metallkomplexe oder einen Metallkomplex enthaltend einen der weiter oben beschriebenen Liganden; und
- Reagieren von Substrat mit dem Kupplungspartner in der Gegenwart des Metallkomplexes oder dessen Derivat, so dass ein Kupplungsprodukt entsteht.

Auch hierbei kann das Metall des Metallkomplexes, wie oben beschrieben, ein Edelmetall und/oder ein Übergangsmetall sein, insbesondere ein Metall der Gruppe 10 oder 11 des Periodensystems der Elemente, wobei es sich bewährt hat, wenn das Metall des Metallkomplexes ausgewählt ist aus der Gruppe bestehend aus Kupfer, Silber, Gold, Platin, Palladium, Nickel und deren Kombinationen ist.

Das Substrat kann eine substituierte aromatische Verbindung sein, insbesondere kann die substituierte aromatische Verbindung eine aromatische oder heteroaromatische Verbindung sein. Diese kann unter Anderem mit einer Abgangsgruppe oder einer ungesättigten aliphatischen Gruppe oder einer Abgangsgruppe substituiert sein, wobei es sich bewährt hat, wenn sie Abgangsgruppe ausgewählt ist aus der Gruppe bestehend aus Halogen, Tosylat, Nosylat und Mesylat und/oder die ungesättigte aliphatische Gruppe ausgewählt ist aus der Gruppe bestehend aus Alken, oder Alkin, insbesondere mit 2 bis 12, insbesondere 2 bis 8 Kohlenstoffatomen.

Der Kupplungspartner kann eine organometallische Verbindung umfassen, die insbesondere ausgewählt sein kann aus der Gruppe bestehend aus organischen Borverbindungen, organischen Lithiumverbindungen, organischen Zinkverbindungen, organischen Lithiumverbindungen und Grignardverbindungen, wobei vorteilhaft die organometallische Verbindung mindestens einen aromatischen Rest umfasst oder wobei die organometallische Verbindung mindestens einen ungesättigten aliphatischen Rest umfasst, oder wobei die organometallische Verbindung mindestens einen gesättigten aliphatischen Rest umfasst.

Ebenso ist Gegenstand der Patentanmeldung ein solches Verfahren, wobei die Kopplungsreaktion ausgewählt ist aus der Gruppe bestehend aus (i) katalytischen Hydrofunktionalisierungsreaktionen von Alkinen und Alkenen;
(ii) katalytischen Hydroaminierungsreaktionen von Alkinen und Alkenen;
(iii) katalytischen O-H-Additionsreaktionen an Alkinen und Alkenen;
(iv) katalytischen Kupplungsreaktionen;
(v) katalytischen Suzuki-Kupplungsreaktionen, insbesondere für die Darstellung von Biarylen;
(vi) katalytischen Kreuz-Kupplungsreaktionen, insbesondere C-N und C-O-Kupplungsreaktionen; und/oder
(vii) katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen.

Die Erfindung wird an Hand der nachfolgenden Beispiele näher erläutert. Diese stehen exemplarisch für die Darstellung der Ylid-funktionalisierten Phosphane, ihren Übergangsmetallkomplexen und dem Einsatz in der Katalyse und sind keinesfalls als Einschränkung des Schutzumfangs der Erfindung zu verstehen.

### Beispiele

### Beispiel 1: Darstellung von Ylid-funktionalisierten Phosphanen

### A) Darstellung über metallierte Ylide mit Monochlorphosphanen (Route A)

Darstellung des Ylid-funktionalisierten Biscyclohexylphosphans mit On = PPh₃, R=R'=Cy, X = SO₂Tol aus dem metallierten Ylid [Ph₃PCSO₂Tol]Na

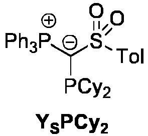

2.05 g (4.5 mmol) des metallierten Ylids [Ph₃PCSO₂Tol]Na wurden in 40 ml THF gelöst und auf -50 °C abgekühlt. Bei dieser Temperatur wurden 1.13 ml (5.4 mmol) Dicyclohexylchlorphosphan langsam zur gelben Reaktionslösung hinzugegeben, die sich beim Aufwärmen auf Raumtemperatur schließlich entfärbte. Nach Entfernen des Lösungsmittels im Vakuum wurde der gebildetet farblose Feststoff in 30 mL Toluol aufgenommen und die Suspension filtriert. Erneute Reduktion des Lösungsmittels führte zur Bildung eines Feststoffes. Dieser wurde abfiltriert, wodurch das Produkt als farbloser Feststoff gewonnen werden konnte (Ausbeute: 1.97 g, 3.2 mmol, 71 %).

¹H-NMR (250 MHz, THF-d⁸): δ = 0.78-1.29 (m, 10H, C*H*_{Cy}), 1.47-1.79 (m, 10H, C*H*_{Cy}), 2.13-2.23 (m, 2H, C*H*_{Cy}), 2.31 (s, 3H, C*H*_{STol}), 6.90-7.10 (m, 4H, C*H*_{STol}, meta/ortho), 7.35-7.61 (m, 9H, C*H*_{PPh}, meta/para), 7.65-7.78 (m, 6H, C*H*_{PPh}, ortho). ³¹P{¹H}-NMR (250 MHz, THF-d⁸): δ = -5.79 (d, ²*J*_{PP} = 164.3 Hz: *P*Cy), 25.58 (d, ²J_{PP} = 164.4 Hz; *P*Ph₃). TEP = 2055.1 cm⁻¹.

Entsprechend dieser Vorschrift erfolgte ebenfalls die Darstellung der einfachen Ylid-funktionalisierten Phosphane mit:
On = PPh₃, X = SO₂Tol, R=R'=Ph (T. Scherpf et al., Angew. Chem. Int. Ed., 54, 8542 (2015)), *i*Pr, Adamantyl oder Cyclohexyl
On = PPh₃, X = CN, R=R'=Ph oder Cy.

Darüber hinaus wurden entsprechend dieser Vorschrift das Bisylid-funktionalisierte Posphan Y₂PPh mit On = PPh₃ und X = CN dargestellt.

### B) Darstellung über die Dichlorphosphan-Zwischenstufe (Route A)

Darstellung des Ylid-funktionalisierten Dimethylphosphans mit On = PPh₃, R=R'=Me, X = SO₂Tol aus dem metallierten Ylid [Ph₃PCSO₂Tol]Na

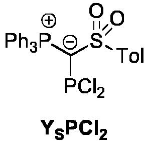

In einem 50 mL Schlenkrohr wurden 3.01 g (6.66 mmol) des metallierten Ylids in 35 mL THF gelöst. Danach wurden 0.70 mL (1.10 g, 7.99 mmol) Phosphortrichlorid schnell zugetropft und für 5 min zum Sieden erhitzt. Nachdem die Reaktionslösung über Nacht gerührt wurde, wurde das Lösemittel im Vakuum entfernt und der Feststoff in Dichlormethan gelöst. Anschließend wurde die Suspension über eine Filterkanüle filtriert und das Lösemittel erneut im Vakuum abgezogen. Der dabei ausgefallene Feststoff wurde mit Benzol gewaschen, über eine Umkehrfritte abfiltriert und im Vakuum getrocknet. Das Ylid-funktionalisierte Dichlorphosphan kann so als farbloser Feststoff gewonnen werden (Ausbeute: 2.88 g, 5.44 mmol, 82 %).

¹H-NMR (500.1 MHz, CD₂Cl₂): δ [ppm] = 2.37 (s, 3 H; CH₃), 7.04-7.07 (m, 2 H; CH_{Tol,meta}), 7.22-7.25 (m, 2 H; CH_{Tol,ortho}), 7.49-7.55 (m, 6 H; CH_{PPh,meta}), 7.64-7.69 (m, 3 H; CH_{PPh,para}), 7.71-7.77 (m, 6 H; CH_{PPh,ortho}). ¹³C{¹H}-NMR (125.8 MHz, CD₂Cl₂): δ [ppm] = 21.5 (s, CH₃), 62.9 (dd, ¹*J*_{CP} = 111.8 Hz, ¹*J*_{CP} = 91.8 Hz; C_{PCS}), 124.1 (dd, ¹*J*_{CP} = 92.8 Hz, ³*J*_{CP} = 3.6 Hz; C_{PPh,ipso}), 129.1 (s, CH_{Tol,meta}), 129.2 (d, ³*J*_{CP} = 12.8 Hz; CH_{PPh,meta}), 129.7 (d, ⁴*J*_{CP} = 1.9 Hz; CH_{Tol,ortho}), 133.5 (d, ⁴*J*_{CP} = 2.9 Hz; CH_{PPh,para}), 135.2 (dd, ²*J*_{CP} = 10.2 Hz, ⁴*J*_{CP} = 1.9 Hz; CH_{PPh,ortho}), 142.4 (s, C_{Tol,para}), 143.9 (s, C_{Tol,ipso}). ³¹P{¹H}-NMR (162.0 MHz, CD₂Cl₂): δ [ppm] = 19.7 (d, ²*J*_{PP} = 110.1 Hz), 159.2 (br).

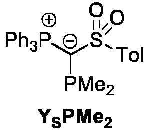

In einem 50 mL Schlenkrohr wurden 299 mg (0.56 mmol) des Ylid-funktionalisierten Dichlorphosphans in 10 mL THF gelöst und langsam mit 2.35 mL (1.13 mmol, 0.48 M) Methyllithium in THF versetzt. Nach Rühren der Lösung über Nacht wurde das Lösungsmittel im Vakuum entfernt und der Rückstand in 15 mL Benzol gelöst. Danach wurde die Suspension mit einer Filterkanüle abfiltriert und das Lösemittel erneut im Vakuum entfernt. Nach Trocknen im Vakuum kann das Dimethylphosphan als farbloser Feststoff (0.38 g, 0.78 mmol; 82 %) isoliert werden.

¹H-NMR (500.1 MHz, C₆D₆): δ [ppm] = 1.70 (s, 6 H; CH_{3,PMe}), 1.96 (s, 3 H; CH_{3,Tol}), 6.74-6.75 (m, 2 H; CH_{Tol,meta}), 6.96-6.99 (m, 6 H; CH_{PPh,meta}), 7.03-7.05 (m, 3 H; CH_{PPh,para}), 7.59-7.60 (m, 2 H; CH_{Tol,ortho}), 7.75-7.77 (m, 6 H; CH_{PPh,ortho}). ¹³C{¹H}-NMR (125.8 MHz, C₆D₆): δ [ppm] = 16.0 (dd, ¹*J*_{CP} = 13.9 Hz, ³*J*_{CP} = 6.5 Hz; CH_{3,PMe}), 21.1 (s, CH_{3,Tol}), 42.2 (dd, ¹*J*_{CP} = 107.8 Hz, ¹*J*_{CP} = 53.7 Hz; C_{PCS}), 126.9 (s, CH_{Tol,ortho}), 128.3 (d, ³*J*_{CP} = 12.0 Hz; CH_{PPh,meta}), 128.6 (s, CH_{Tol,meta}), 131.7 (d, ⁴*J*_{CP} = 2.8 Hz; CH_{PPh,para}), 135.0 (dd, ²*J*_{CP} = 9.5 Hz, ⁴*J*_{CP} = 2.5 Hz; CH_{PPh,ortho}), 139.8 (s, C_{Tol,para}), 148.5 (s, C_{Tol,ipso}). ³¹P{¹H}-NMR (162.0 MHz, C₆D₆): δ [ppm] = -46.4 (d, ²*J*_{PP} = 146.5 Hz), 23.6 (d, ²*J*_{PP} = 146.5 Hz). TEP = 2059.7 cm⁻¹.

Entsprechend dieser Vorschrift erfolgte die Darstellung der einfachen Ylid-funktionalisierten Phosphane mit On = PPh₃, X = SO₂Tol oder CN, R=R'= Ph, Me, iPr oder Cy.

Darüber hinaus wurde entsprechend dieser Vorschrift das Bisylid-funktionalisierte Posphan Y₂PCy mit On = PPh₃ und X = CN dargestellt.

### C) Darstellung durch Phosphorylierung und Deprotonierung von Oniumsalzen (Route B)

Die entsprechenden Oniumsalze sind entweder käuflich erwerbbar oder können nach Standardsynthesemethoden wie der Quartärnisierung entsprechender Phosphan-, Sulfid- oder Aminvorstufen mit Alkylhalogeniden und -tosylaten dargestellt werden. Die Salze (wie z.B. **A** im folgenden Schema) lassen sich mit Metallbasen wie Kalium-tert-butanolat, Metallhydriden oder Lithium/Natrium/Kalium-bis(trimethylsilyl)amid deprotonieren und direkt mit dem Halogenphosphan zum phosphanyl-substituierten Oniumsalz (z.B. **B**) umsetzen. Dieses kann ohne Aufarbeitung mit einem weiteren Äquivalent Base in das gewünschte Ylid-funktionalisierten Phosphan überführt werden. Einfache Vertreter lassen sich von den kommerziell erhältlichen Bis(diphenyl-phosphino)methan und Bis(dicyclohexylphosphino)methan durch Quartärnisierung mit Alkylhalogeniden und anschließender Deprotonierung gewinnen (J. Langer et al., ARKIVOC, 3, 210 (2012)). Andere Funktionalisierungen können gemäß dem folgenden Schema realisiert werden. Als On-Einheit haben sich insbesondere Phosphane, Sulfide, Amine, Imine, N-Heterocyclen und Sulfoxide als geeignet erwiesen:

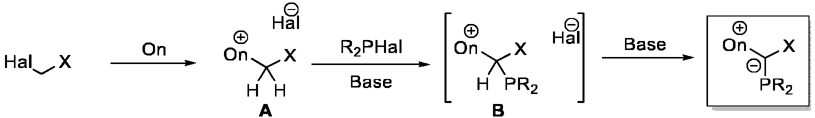

### D) Ausführungsbeispiele: Synthese von Methyl- (Z = Me), Phenyl- (Z = Ph) und Silylfunktionalisierten (Z = SiMe₃) Ylidphosphanen

Das Oniumsalz **A** (hier: Ethyltriphenylphosphoniumiodid) mit X = Me und Hal = I kann entsprechend bekannter Literaturvorschriften dargestellt (M. N. Alberti et al., Org. Lett., 10, 2465 (2008)) oder käuflich (CAS: 4736-60-1) erworben werden. Die Bildung des Ylid-funktionalisierten Phosphans Y_{Me}PCy₂ mit R=Cy erfolgt gemäß:

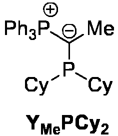

1.90 g (4.50 mmol) Ethyltriphenylphosphoniumiodid und 500 mg (12.5 mmol) Kaliumhydrid wurden in 20 ml THF gegeben. Die Suspension wurde für 4 Stunden auf 60 °C erwärmt, woraufhin keine Bildung von Wasserstoff mehr beobachtet werden konnte. Anschließend wurden 1.60 g (5.0 mmol) Dicyclohexyliodphosphan tropfenweise hinzugegeben und das Gemisch erneut für 16 Stunden auf 60 °C erhitzt. Nach Entfernen des Lösungsmittels im Vakuum wurden 20 mL Hexan hinzugegeben. Das Gemisch wurde bis zum Siedepunkt erhitzt und heiß filtriert. Das Lösungsmittel wurde erneut im Vakuum entfernt und der verbleibende Feststoff in einer möglichst geringen Menge eines 1:1 Gemisches aus Hexan und Toluol gelöst. Durch Lagerung der Lösung bei -75 °C für drei Tage konnte das gewünschte Phosphan als oranger, kristalliner Feststoff isoliert werden (1.63 g, 3.35 mmol, 74%).

¹H NMR: (400.1 MHz, CD₂Cl₂): δ = 1.20-1.59 (m, 10H, *Cy),* 1.70- 1.89 (m, 6H, *Cy),* 1.89-2.07 (m, 4H, *Cy),* 2.11 (dd, 3H, ³*J*_{HP} = 16.3 Hz, ³*J*_{HP} = 2.4 Hz, C*H*₃), 2.21-2.30 (m, 2H, *Cy),* 7.05-7.10 (m, 9H, C*H*_{PPh, ortho} and C*H*_{PPh}, ₚₐᵣₐ), 7.69-7.79 (m, 6H, C*H*_{PPh}, ₘₑₜₐ), ³¹P{¹H}-NMR: (162.1 MHz, , CD₂Cl₂): δ = -2.44 (d, ²*J*_{PP} = 176.8 Hz, *P*Cy₂), 25.4 (d, ²*J*_{PP} = 176.8 Hz, *P*Ph₃). TEP: 2050.1 cm⁻¹.

Nach dieser Vorschrift erfolgte auch die Darstellung der Ylid-funktionalisierten Phosphane mit On = PPh₃, X = Et, CH₂Ph, Cy, SiMe₃, R=R'= Ph, Me oder Cy.

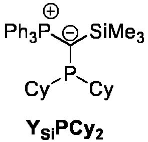

2.00 g (4.20 mmol) Trimethylsilymethylenphenylphosphoniumiodid und 250 mg (6.23 mmol) Kaliumhydrid wurden in 20 ml THF gegeben. Die Suspension wurde für 16 Stunden bei Raumtemperatur gerührt, woraufhin keine Bildung von Wasserstoff mehr beobachtet werden konnte. Die gelbe Suspension wurde filtriert, mit 5 ml THF gewaschen und in einen Tropftrichter überführt und langsam in eine Lösung von Dicyclohexyliodophosphan (1.5 g, 4.63 mmol) in 20 ml Toluol bei -78 °C zugetropft. Die Lösung wurde langsam auf RT erwärmt und dann 24 h gerührt. Der ausgefallene Feststoff wurde abfiltriert und 2 Mal mit 5 ml Toluol gewaschen und im Vakuum getrocknet. Der Feststoff und 670 mg KHMDS (3.36 mmol) wurden in 20 ml THF gelöst und 1 Stunde gerührt. Der ausgefallene Feststoff wurde durch Filtration entfernt, das Lösungsmittel im Vakuum entfernt und der zurückgebliebene Feststoff in 50 ml kochendem Hexan gelöst und heiß filtriert. Die Lösung wurde langsam auf RT abgekühlt und 16 Stunden stehen gelassen. Die Lösung über den enstandenen gelben Kristallen wurde entfernt und die Kristalle dreimal mit 5 ml kaltem Hexan gewaschen und anschließend im Vakuum getrocknet. (1.07 g, 1.98 mmol, 47%).

¹H NMR: (400.1 MHz, C₆D₆): δ = 0.28 (s, 6.3 H, SiMe₃, *trans),* 0.40 (s, 2.7 H, SiMe₃, *cis*), 0.89-2.25 (m, 20H, *Cy,*), 2.34-2.60 (m, 2H, *Cy),* 7.02-7.11 (m, 9H, C*H*_{PPh}, ₒᵣₜₕₒ and C*H*_{PPh}, ₚₐᵣₐ), 7.73-7.82(m, 6H, C*H*_{PPh}, ₘₑₜₐ), ³¹P{¹H}-NMR: (162.1 MHz, , C₆D₆): δ = 8.3 (d, ²*J*_{PP} = 37.2 Hz, P*C*y₂, *cis*) *,* 12.8 (d, ²*J*_{PP} = 172.2 Hz, P*C*y₂, *trans*), 19.7 (d, ²*J*_{PP} = 37.2 Hz, PPh₃, *cis*) , 29.1 (d, ²*J*_{PP} = 172.2 Hz, PPh₃, *trans*),. TEP: 2048.9 cm⁻¹.

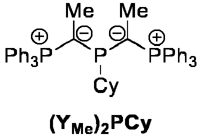

4.00 g (10 mmol) Ethyltriphenylphosphoniumiodid und 600 mg (15 mmol) Kaliumhydrid wurden in 20 ml THF gegeben. Die Suspension wurde für 16 Stunden bei Raumtemperatur gerührt, woraufhin keine Bildung von Wasserstoff mehr beobachtet werden konnte. Die rote Suspension wurde filtriert, mit 5 ml THF gewaschen und in einen Tropftrichter überführt und langsam in eine Lösung von Cyclohexyldichlorophosphan (460 mg, 2.5 mmol) in 20 ml THF unter starkem Rühren zugetropft. Die Lösung wurde 16h bei RT gerührt. Der ausgefallene Feststoff wurde abfiltriert und 2 Mal mit 10 ml THF gewaschen. Das Lösungsmittel der erhaltenen roten Lösung wurde im Vakuum entfernt und der erhaltene Feststoff im Vakuum getrocknet. 20 ml Cyclohexan wurde zugegeben, zum Sieden erhitzt, heiß filtriert und dann langsam auf RT gekühlt, wobei ein roter Feststoff ausfiel. Die überstehende Lösung wurde entfernt und der Feststoff 2 mal mit 2 ml Pentan gewaschen und im Vakuum getrocknet. (0.68 g, 0.98 mmol, 39%).

¹H NMR: (400.1 MHz, C₆D₆): δ = 1.17-1.36 (m, 3H, *Cy*,), 1.47-1.60 (m, 2H, *Cy*,), 1.70-1.80 (m, 1H, *Cy*,), 1.84-1.94 (m, 2H, *Cy*,), 2.22-2.32 (m, 2H, *Cy),* 2.52 (dd, ³*J*_{HP} = 17.4 Hz, ³*J*_{HP} = 2.0 Hz 6H, *Me*), 2.75-2.86 (m, 1H, *Cy),* 7.98-7.04 (m, 12H, C*H*_{PPh}, ₒᵣₜₕₒ), 7.04-7.11 (m, 6H, C*H*_{PPh}, ₚₐᵣₐ), 7.62-7.70(m, 12H, C*H*_{PPh}, ₘₑₜₐ), ³¹P{¹H}-NMR: (162.1 MHz, , C₆D₆): δ = -20.3 (t, ²*J*_{PP} = 175.1 Hz, *P*Cy) , 19.5 (d, ²*J*_{PP} = 175.1 Hz, *P*Ph₃).

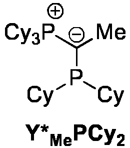

In einem Schlenkkolben wurden 10.0 g (22.9 mmol) Ethyltricyclohexylphosphoniumiodid in 75 ml THF suspendiert. Die Suspension wurde in einem Eisbad auf 0°C gekühlt und es wurde langsam 14.5 ml (22.9 mmol) einer 1.58 M Lösung von n-BuLi in Hexanen zugetropft. Die nun klare Lösung wurde auf Raumtemperatur erwärmt und es wurden 2.45 ml (2.67 g, 11.5 mmol) Dicyclohexylphosphanchlorid zugegeben. Ein farbloser Feststoff fiel sofort aus und die Suspension wurde 16h auf 60 °C erhitzt. Der farblose Feststoff wurde abfiltriert und zwei Mal mit je 20 ml THF gewaschen und unter Argon gelagert. Das Filtrat wurde im Vakuum getrocknet und der daraus resultierende Feststoff in 100 ml Cyclohexan gelöst, filtriert und das Cyclohexan wieder im Vakuum entfernt. Nach Trocknem im Vakuum konnte das Produkt als farbloser Feststoff isoliert werden. (4.93 g, 9.77 mmol, 85 %).

¹H NMR (400 MHz, C₆D₆) δ = 1.08 - 1.23 (m, 9H, C*H*_{2, PCy3, H3 + H4}), 1.32 - 1.43 (m, 2H, C*H*₂, P*C*y₂, _{H4}), 1.43 - 1.58 (m, 12H, C*H*₂, _{PCy3, H2 +} P*C*y₂, _{H2 + H3}), 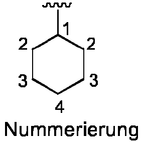 1.58 - 1.66 (m, 5H, C*H*₂, _{PCy3, H4 +} P*C*y₂, _{H2}), 1.67 - 1.79 (m, 6H, C*H*₂, _{PCy3, H3}), 1.76 - 1.83 (m, 2H, C*H*_{2, P*C*y2, H4}), 1.82 - 1.96 (m, 11H, C*H*₂, _{PCy3, H2 + P*C*y2, H2} + C*H*₃), 1.95 - 2.09 (m, 4H, C*H*_{2, PCy3, H3 +} C*H*, _{P*C*y2, H1}), 2.11 - 2.23 (m, 2H, C*H*_{2, P*C*y2, H2}), 2.23 - 2.34 (m, 2H, C*H*_{2, P*C*y2, H3}), 2.34 - 2.52 (m, 3H, C*H*, _{PCy3, H1}) ppm. ¹³C {¹H} NMR (101 MHz, C₆D₆) δ = -1.7 (dd, ¹*J*_{CP} = 108.8 Hz, ¹*J*_{CP} = 21.1 Hz, P-*C*⁻-P), 14.8 (dd, ²*J*_{CP} = 8.4 Hz, ²*J*_{CP} = 0.7 Hz, CH₃), 26.6 - 27.0 (m, C*H*_{2, PCy3, C4}), 27.7 - 27.8 (m, C*H*_{2, P*C*y2, C4}), 27.8 (d, ³*J*_{CP} = 11.0 Hz, C*H*_{2, PCy3, C3}), 28.0 - 28.4 (m, C*H*_{2, PCy3, C2}), 28.5 (d, ³*J*_{CP} = 11.8 Hz, C*H*_{2, P*C*y2, C3}), 29.0 (d, ³*J*_{CP} = 8.1 Hz, C*H*_{2, P*C*y2, C3}), 32.9 (d, ²*J*_{CP} = 9.9 Hz, C*H*_{2, P*C*y2, C2}), 33.67 (dd, ¹*J*_{CP} = 49.5 Hz, ³*J*_{CP} = 8.9 Hz, CH, _{PCy3, C1}) 33.69 (d, ²*J*_{CP} = 19.8 Hz, C*H*_{2, P*C*y2, C2}), 38.4 (dd, ¹*J*_{CP} =13.8 Hz, ³*J*_{CP} = 5.3 Hz, *C*H, _{P*C*y2, C1}) ppm. ³¹P {¹H} NMR (162 MHz, C₆D₆) δ = 1.0 (d, ²*J*_{PP} = 128.9 Hz, *P*Cy₂), 30.6 (d, ²*J*_{PP} = 128.9 Hz, *P*Cy₃) ppm. CHNS: Berechnet: C: 76.14, H: 11.58. Gemessen: C: 75.62, H: 11.32.

### Rückgewinnung von Ethyltricyclohexylphosphoniumiodid

Der farblose Feststoff, der nach dem Waschen mit THF zurückblieb wurde im Vakuum getrocknet und in 15 ml DCM gelöst. Die Lösung wurde filtriert und das Lösungsmittel im Vakuum entfernt und getrocknet. Ethyltricyclohexylphosphoniumiodid wurde als farbloser Feststoff erhalten. (4.27 g, 9.8 mmol, 85 %).

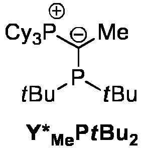

In einem Schlenkkolben wurden 2.55 g (5.84 mmol) Ethyltricyclohexylphosphoniumiodid in 25 ml THF suspendiert. Die Suspension wurde in einem Eisbad auf 0°C gekühlt und es wurde langsam 2.78 ml (5.84 mmol) einer 2.1 M Lösung von *n*BuLi in Hexanen zugetropft. Die nun klare Lösung wurde auf Raumtemperatur erwärmt. Es wurden 0.55 ml (0.53 g, 2.92 mmol) Di-tertbutylchlorphosphan zugegeben und 16h lang auf 60 °C erwärmt. Der farblose Feststoff wurde abfiltriert und zwei Mal mit je 5 ml THF gewaschen. Das Filtrat wurde im Vakuum getrocknet und der daraus resultierende Feststoff in 50 ml Cyclohexan gelöst. Nach erneuter Filtration wurde das Lösungmittel im Vakuum entfernt und das Produkt als farbloser Feststoff isoliert (1.32 g, 1.51 mmol, 52 %; nicht optimierte Ausbeute).

¹H NMR (400 MHz, C₆D₆) δ = 1.08 - 1.24 (m, 9H, C*H*_{2, Cy, H3 + H4}), 1.54 (d, ³*J*_{HP} = 10.7 Hz, 18H, C*H*3, *t*Bu), 1.44 - 1.67 (m, 9H, C*H*_{2, Cy, H2 + H4}), 1.63 - 1.76 (m, 6H, C*H*_{2, Cy, H3}), 2.04 (d, ³*J*_{PH} = 13.0 Hz, 6H, C*H*_{2, Cy, H2}), 2.11 (dd, ³*J*_{HP} = 13.8 Hz, ³*J*_{HP} = 3.1 Hz, 3H, C*H*₃), 2.16 - 2.32 (m, 3H, C*H*_{, Cy, H1}) ppm. 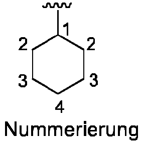 ¹³C {¹H} NMR (101 MHz, C₆D₆) δ = 4.5 (dd, ¹*J*_{CP} = 102.9 Hz, ¹*J*_{CP} = 27.3

Hz, P-*C*⁻-P), 18.2 (dd, ²*J*_{CP} = 8.6 Hz, ²*J*_{CP} = 0.6 Hz, CH₃), 27.0 (*C*H_{2, Cy, C4}), 28.2 (d, ³*J*_{CP} = 10.6 Hz, C*H*_{2, Cy, C3}), 29.6 - 29.8 (m, C*H*_{2, Cy, C2}), 33.3 (d, ²*J*_{CP} = 14.4 Hz, *C*H3, *t*Bu), 36.5 (dd, ¹*J*_{CP} = 23.4 Hz, ¹*J*_{CP} = 6.6 Hz, *C*,_{*t*Bu}) 37.0 (dd, ¹*J*_{CP} = 47.9 Hz, ³*J*_{CP} = 9.0 Hz, CH_{, Cy, C1}) ppm. ³¹P {¹H} NMR (162 MHz, C₆D₆) δ = 26.4 (d, ²*J*_{PP} = 146.9 Hz, *Pt*Bu₂), 30.4 (d, ²*J*_{PP} = 146.9 Hz, *P*Cy₃) ppm.

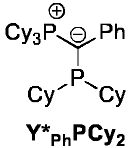

In einem Schlenkrohr wurden 500 mg (1.11 mmol) Benzyltricyclohexylphosphoniumiodid eingewogen und in 10 mL THF suspendiert. Zu der Suspension wurden langsam 0.51 mL (1.11 mmol; 1 eq.) einer n-BuLi-Lösung (2.18 M in Hexan) zugetropft bis sich eine klare Lösung gebildet hatte. Die Lösung wurde 45 min gerührt und anschließend 0.32 mL (335 mg; 1.44 mmol; 1.3 eq.) Cy₂PCl zugetropft. Die Suspension wurde 16h bei Raumtemperatur gerührt. Der Feststoff wurde abfiltriert und zwei Mal mit je 10 mL THF gewaschen und 1.5 h im Hochvakuum getrocknet (558 mg). Der erhaltene Feststoff sowie 133 mg (1.19 mmol) Kalium-*tert*-butanolat wurden in ein Schlenkrohr eingewogen und in 20 mL trockenem Toluol suspendiert. Die Suspension wurde 16h gerührt und dann abfiltriert. Der Feststoff wurde 2-mal mit 10 ml Toluol gewaschen. Das Lösemittel des Filtrats wurde im Vakuum entfernt und das Produkt als farbloser Feststoff erhalten (0.35 g, 0.62 mmol, 56 %; nicht optimierte Ausbeute).

¹H NMR (400 MHz, Tol-d₈) δ = 1.00 - 1.22 (m, 9H, C*H*_{2, PCy3, H3 + H4}), 1.22 - 1.64 (m, 19H, C*H*_{2, P*C*y2, H2 + H3 + H4 PCy3, H2}, _{H3}), 1.64- 1.83 (m, 12H, C*H*₂, _{PCy2, H3 + H4 PCy3,} , _{H3}), 1.83- 2.01 (m, 10H, C*H*_{2, PCy2, H2 PCy3, , H2}), 2.33- 2.46 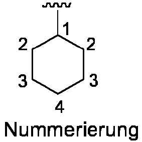 (m, 5H, C*H*_{, P*C*y2, H1, PCy3, H1}), 6.97- 7.00 (m, 1H, C*H*, _{Ph, para}), 7.18- 7.25 (m, 2H, C*H*, _{Ph, meta}), 7.34- 7.40 (m, 2H, C*H*, _{Ph, ortho}) ppm. ³¹P{¹H}-NMR (162.1MHz, Tol-d₈): δ [ppm]= -5.4 (d, ²*J*_{PP} = 132.0 Hz, *Pt*Bu₂), 21.5 (d, ²*J*_{PP} = 132.0 Hz,) ppm.

Beispiel 2: Darstellung von Übergangsmetallkomplexen der Ylid-funktionalisierten

### Phosphanen

### A) Nickelcarbonyl-Komplexe

Beispielhaft wird hier die Synthese des Komplexes mit dem aus Beispiel 1.B) dargestellten Ylid-funktionalisierten Dimethylphosphans mit On = PPh₃, R=R'=Me, X = SO₂Tol beschrieben.

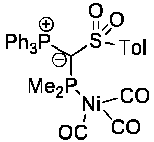

In einem 30 mL Schlenkrohr wurden 0.10 g (0.20 mmol) des Phosphans in 5 mL Pentan suspendiert. Danach wurden 0.43 mL (0.31 mmol) 0.7 M Nickeltetracarbonyl in Benzol schnell zuggetropft und das Reaktionsgemisch für 2 h bei Raumtemperatur gerührt. Anschließend wurde das Lösemittel mittels Kanüle entnommen und der Feststoff zweimal mit je 5 mL Pentan gewaschen. Nach Abnehmen des Lösungsmittels und Trocknen im Vakuum wurde der Komplex als gräulicher Feststoff erhalten (79.1 mg, 0.13 mmol, 61 %).

¹H-NMR (500.1 MHz, CD₂Cl₂): δ [ppm] = 1.97 (d, ²*J*_{PH} = 4.70 Hz, 6 H; CH_{3,PMe}), 2.30 (s, 3 H; CH_{3,Tol}), 6.93-6.95 (m, 2 H; CH_{Tol,meta}), 7.16-7.17 (m, 2 H; CH_{Tol,ortho}), 7.38-7.42(m, 6 H; CH_{PPh,meta}), 7.53-7.58(m, 9 H; CH_{PPh,ortho+para}). ¹³C{¹H}-NMR (125.8 MHz, CD₂Cl₂): δ [ppm] = 21.4 (s, CH_{3,Tol}), 23.4 (dd, ¹*J*_{CP} = 26.8 Hz, ³*J*_{CP} = 3.5 Hz; CH_{3,PMe}), 39.1 (dd, ¹*J*_{CP} = 105.6 Hz, ¹*J*_{CP} = 3.2 Hz; C_{PCS}), 125.9 (s, CH_{Tol,ortho}), 126.9 (dd, ¹*J*_{CP} = 91.5 Hz, ³*J*_{CP} = 1.9 Hz; C_{PPh,ipso}), 128.8 (d, ³*J*_{CP} = 12.4 Hz; CH_{PPh,meta}), 129.0 (s, CH_{Tol,meta}), 132.8 (d, ⁴*J*_{CP} = 3.0 Hz; C_{PPh,para}), 135.1 (d, ²*J*_{CP} = 9.8 Hz; CH_{PPh,ortho}), 140.7 (s, C_{Tol,para}), 146.7 (dd, ³*J*_{CP} = 1.21 Hz, ³*J*_{CP} = 1.2 Hz; CH_{Tol,ipso}), 196.2 (s, C_{CO}). 31_{P}{¹H}-NMR (162.0 MHz, CD₂Cl₂): δ [ppm] = -11.8 (d, ²J_{PP} = 75.6 Hz), 20.3 (d, ²*J*_{PP} = 75.6 Hz) Elementaranalyse: gemessen: C, 58.41; H, 4.51; S, 4.97. berechnet: C, 58.80; H, 4.46; S, 5.06.

### B) Goldchlorid-Komplexe

Beispielhaft wird hier die Synthese des Komplexes mit dem aus Beispiel 1.A. dargestellten Ylid-funktionalisierten Diphenylphosphans mit On = PPh₃, R=R'=Ph, X = SO₂Tol beschrieben.

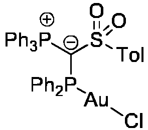

In einem 50 mL Schlenkrohr wurden 0.20 g (3.26 mmol) des Phosphans und 0.11 g (3.26 mmol) (THT)AuCl (THT = Tetrahydrothiophen) in 5 mL THF gelöst und die Reaktionsmischung über Nacht bei Raumtemperatur gerührt, wobei sich ein farbloser Niederschlag bildete. Der Feststoff wurde über eine Umkehrfritte abfiltriert und im Vakuum getrocknet, wobei der gewünschte Goldkomplex (0.32 g, 0.38 mmol, 77 %) erhalten wurde.

¹H-NMR (500.1 MHz, CD₂Cl₂): δ [ppm] = 2.27 (s, 3 H; CH₃), 6.20-6.23 (m, 2 H; CH_{Tol,ortho}), 6.70-6.72 (m, 2 H; CH_{Tol,meta}), 7.41-7.51 (m, 12 H; CH_{PPh,ortho+meta}), 7.61-7.62 (m, 2 H; CH_{AuPPh,para}), 7.63 - 7.66 (m, 7 H; CH_{AuPPh,meta+PPh,para}), 7.86-7.90 (m, 4H; CHAu_{PPh,ortho}). ¹³C{¹H}-NMR (125.8 MHz, CD₂Cl₂): δ [ppm] = 21.3 (s, CH3), 42.8 (dd, ¹*J*_{CP} = 101.4 Hz, ¹*J*_{CP} = 57.6 Hz; C_{PCS}), 126.0 (dd, ¹*J*_{CP} = 86.9 Hz, ³*J*_{CP} = 8.8 Hz; CPPh,ipso), 126.0 (s, CH_{Tol,ortho}), 128.5 (dd, ²*J*_{CP} = 11.7 Hz, ⁴*J*_{CP} = 0.8 Hz; CH_{PPh,ortho}), 128.9 (s, CH_{Tol,meta}), 129.1 (d, ³*J*_{CP} = 12.5 Hz; C_{PPh,meta}), 131.1 (d, ⁴*J*_{CP} = 2.6 Hz; CH_{AuPPh,para}), 133.4 (d, ⁴*J*_{CP} = 2.8 Hz; CH_{PPh,para}), 133.4 (dd, ¹*J*_{CP} = 63.0 Hz, ³*J*_{CP} = 8.2 Hz; C_{AuPPh,ipso}), 135.2 (d, ³*J*_{CP} = 13.6 Hz; CH_{AuPPh,meta}), 135.4 (dd, ²*J*_{CP} = 9.2 Hz, ⁴*J*_{CP} = 1.2 Hz; CH_{AuPPh,ortho}), 141.7 (s, C_{Tol,para}), 144.4 (s, CH_{Tol,ipso}). ³¹P{¹H}-NMR (162.0 MHz, CD₂Cl₂): δ [ppm] = 21.4 (d, ²*J*_{PP} = 68.3 Hz), 22.1 (d, ²*J*_{PP} = 68.3 Hz). Elementaranalyse: gemessen: C, 54.19; H, 3.90; S, 3.68. berechnet: C, 53.88; H, 3.81; S, 3.78.

Alle in der Katalyse (siehe unten) verwendeten Gold-Phosphan-Komplexe wurden entsprechend dieser Vorschrift dargestellt.

### C) Palladiumallyl-Komplexe

Beispielhaft wird hier die Synthese von drei Palladiumallyl-Komplexen der Ylid-substituierten Phosphane beschreiben. Komplexe mit weiteren als den hier aufgeführten Liganden können entsprechend der aufgeführten Vorschriften dargestellt werden.

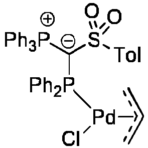

Synthese des Komplexes mit dem aus Beispiel 1.A) dargestellten Ylid-funktionalisierten Diphenylphosphans mit On = PPh₃, R=R'=Ph, X = SO₂Tol:.

In einem 50 mL Schlenkrohr wurden 201 mg (0.325 mmol) des Phosphans Y_{S}PPh₂ und 59 mg (0.163 mmol) des Allylpalladium(II)chlorid-Dimers in 10 mL Dichlormethan gelöst und für 1h bei Raumtemperatur gerührt. Das Lösemittel im Vakuum wurde daraufhin auf 1 mL reduziert und die Mischung mit Pentan versetzt bis ein Feststoff ausfiel. Dieser wurde über eine Umkehrfritte abfiltriert und anschließend im Vakuum getrocknet, wobei der Palladiumkomplex als bräunlicher Feststoff (163 mg, 0.21 mmol, 63 %) erhalten wurde.

¹H-NMR (500.1 MHz, CD₂Cl₂): δ [ppm] = 1.8-2.5 (br, 2H; CH_{2,allyl}), 2.22 (s, 3 H; CH₃), 2.76 (br, 1 H; CH_{2,allyl}), 4.12 (m, 1 H; CH_{2,allyl}), 4.84 (br, 1H; CH_{allyl}), 6.71- 6.73 (m, 2 H; CH_{Tol,meta}), 6.76-6.78 (m, 2 H; CH_{Tol,ortho}), 7.16-7.18 (m, 4 H; CH_{PdPPh,meta}), 7.22-7.25 (m, 2 H; CH_{PdPPh,para}), 7.41-7.45 (m, 6 H; CH_{PPh,meta}), 7.53-7.57 (m, 3H; CH_{PPh,para}), 7.84-7.88 (m, 4H; CH_{PdPPh,ortho}), 7.97-8.01 (m, 6H; CH_{PPh,ortho}). ¹³C{¹H}-NMR (125.8 MHz, CD₂Cl₂): δ [ppm] = 21.3 (s, CH₃), 42.3 (dd, ¹*J*_{CP} = 105.2 Hz, ¹*J*_{CP} = 20.4 Hz; C_{PCS}), 64.7 (br; CH_{2,allyl}), 78.3 (d, ²*J*_{CP} = 31.8 Hz; CH_{2,allyl}), 117.7 (d, ²*J*_{CP} = 4.3 Hz; CH_{allyl}), 126.5 (s, CH_{Tol,ortho}), 127.4 (d, ²*J*_{CP} = 10.3 Hz; CH_{PdPPh,meta}), 128.3 (dd, ¹*J*_{CP} = 94.0 Hz, ³*J*_{CP} = 1.2 Hz; C_{PPh,ipso}), 128.4 (dd, ¹*J*_{CP} = 55.1 Hz, ³*J*_{CP} = 12.4 Hz; CH_{PdPPh,ipso}), 128.5 (s, CH_{Tol,meta}), 128.5 (d, ³*J*_{CP} = 12.8 Hz; CH_{PPh,meta}), 129.4 (d, ⁴*J*_{CP} = 2.0 Hz; CH_{PdPPh,para}), 132.3 (d, ⁴*J*_{CP} = 3.0 Hz; CH_{PPh,para}), 135.2 (d, ²*J*_{CP} = 10.5 Hz; CH_{PdPPh,ortho}), 136.2 (d, ²*J*_{CP} = 10.1 Hz; CH_{PPh,ortho}), 140.9 (s, C_{Tol,para}), 144.2 (s, C_{Tol,ipso}). ³¹P{¹H}-NMR (162.0 MHz, CD₂Cl₂): δ [ppm] = 9.9 (d, ²*J*_{PP} = 67.3 Hz), 22.9 (d, ²*J*_{PP} = 67.3 Hz).

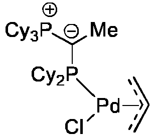

Synthese des Komplexes mit dem aus Beispiel 1.D) dargestellten Ylid-funktionalisierten Dicyclohexylphosphans mit On = PCy₃, R=R'=Cy, X = Me:
Das Phosphan Y*_{Me}PCy₂ (300 mg, 0.60 mmol) und Allylpalladium(II)chlorid-Dimer (109 mg, 0.30 mmol) wurden in 7 ml Toluol gelöst und gerührt bis sich eine klare Lösung gebildet hatte. Das Rühren wurde eingestellt und die Lösung für 3 Tage bei Raumtemperatur gelagert. Es bildeten sich langsam gelbe Kristalle, die vom Lösemittel getrennt, dann drei Mal mit 5ml Pentan gewaschen und im Vakuum getrocknet wurden (230 mg, 0.33 mmol, 56 %; nicht optimierte Ausbeute).

¹H NMR (400 MHz, CD₂Cl₂) δ = 1.12 - 1.58 (m, 25H, C*H*₂, _{PCy3 + PCy2}), 1.62 (dd, ³*J*_{HP} = 12.4 Hz, ³*J*_{HP} = 8.3 Hz, 3H, C*H*₃), 1.67 - 2.05 (m, 25H, C*H*₂, _{PCy3 + PCy2}), 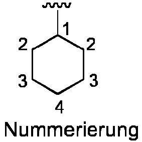 2.10 - 2.24 (m, 2H, C*H*, _{PCy2, H1}), 2.43 - 3.70 (vbr, 2H, C*H*₂, _{C3H5}), 2.54 - 2.72 (m, 3H, CH, PCy₃, _{H1}), 3.54 (dd, ²*J*_{HH} = 13.7 Hz, ³*J*_{HH} = 8.5 Hz, 1H, C*H*₂, _{C3H5}), 4.25 - 4.40 (m, 1H, C*H*₂, _{C3H5}), 5.19 - 5.41 (m, 1H, C*H*, _{C3H5}) ppm.

¹³C {¹H} NMR (101 MHz, CD₂Cl₂) δ = -2.7 (dd, ¹*J*_{CP} = 112.1, ¹*J*_{CP} = 46.8 Hz, P-*C*⁻-P), 16.4 (m, *C*H₃), 26.9 (d, ⁴*J*_{CP} = 1.5 Hz, *C*H₂, PCy₃, _{C4}), 27.2 - 27.5 (m, *C*H₂, _{PCy2, C4}), 27.8 (d, ³*J*_{CP} = 13.4 Hz, *C*H₂, _{PCy2, C3}), 28.1 (d, ³*J*_{CP} = 11.3 Hz, *C*H₂, PCy₃, _{C3}), 28.60 (d, ³*J*_{CP} = 9.9 Hz, *C*H₂, _{PCy2, C3}), 28.63 (d, ²*J*_{CP} = 2.6 Hz, *C*H₂, PCy₃, _{C2}), 30.0 - 30.5 (m, *C*H₂, _{PCy2, C2}), 31.2 (d, ²*J*_{CP} = 5.2 Hz, *C*H₂, _{PCy2, C2}), 32.7 - 36.6 (m, *C*H, _{PCy2, C1}), 38.4 - 39.6 (br, CH, PCy₃, _{C1}), 52.5 - 52.9 (m, *C*H₂, _{C3H5}), 79.5 (d, ²*J*_{CP} = 28.4 Hz, *C*H₂, _{C3H5}), 114.9 (d, ²*J*_{CP} = 4.4 Hz, CH, _{C3H5}) ppm. ³¹P {¹H} NMR (162 MHz, CD₂Cl₂) δ = 20.5 (d, ²*J*_{PP} = 63.5 Hz, *P*Cy₂), 31.5 (d, ²*J*_{PP} = 63.5 Hz, *P*Cy₃) ppm. CHNS: Berechnet: C: 61.13, H: 9.23. Gemessen: C: 61.03, H: 9.34.

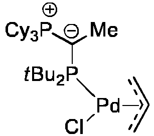

Synthese des Komplexes mit dem aus Beispiel 1.D) dargestellten Ylid-funktionalisierten Phosphans mit On = PCy₃, R=R'=*t*Bu, X = Me:
Das Phosphan Y*_{Me}P*t*Bu₂ (300 mg, 0.66 mmol) und Allylpalladium(II)chlorid-Dimer (115 mg, 0.32 mmol) wurden in 10 ml Toluol gelöst und für 16 h bei Raumtemperatur gerührt. Es bildete sich ein oranger Feststoff der abfiltriert, mit 10 ml Toluol gewaschen und dann im Vakuum getrocknet wurde (265 mg, 0.42 mmol, 66 %).

¹H NMR (400 MHz, CD₂Cl₂) δ = 1.02 - 1.56 (m, 15H, C*H*₂, _{Cy, H2 + H3 + H4}), 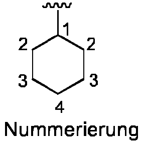 1.21 (d, ³*J*_{HP} = 13.0 Hz, 9H, C*H*₃, _{*t*Bu}), 1.47 (d, ³*J*_{HP} = 13.3 Hz, 9H, C*H*_{3, *t*Bu}), 1.57 - 1.67 (m, 3H, C*H*_{2, Cy, H4}), 1.68 - 1.89 (m, 9H, C*H*_{2, Cy, H3} + C*H*₃), 1.84 - 1.99 (br, 3H, C*H*_{2, Cy, H2}), 2.08 - 2.20 (br, 3H, C*H*_{2, Cy, H2}), 2.69 - 2.99 (br, 3H, C*H*, _{Cy, H1}), 2.91 - 3.85 (vbr, 2H, C*H*_{2, C3H5}), 3.56 (dd, ²*J*_{HH} = 13.5 Hz, ³*J*_{HH} = 8.4 Hz, 1H, C*H*_{2, C3H5}), 4.27 - 4.35 (m, 1H, C*H*_{2, C3H5}), 5.16 - 5.62 (m, 1H, CH, _{C3H5}). ¹³C {¹H} NMR (101 MHz, CD₂Cl₂) δ = 4.0 (dd, ¹*J*_{CP} = 105.1 Hz, ¹*J*_{CP} = 41.3 Hz, P-*C*⁻-P), 18.0 - 19.5 (m, *C*H₃), 26.9 (d, ⁴*J*_{CP} = 1.5 Hz, *C*H_{2, PCy3}, _{C4}), 27.9 (d, ³*J*_{CP} = 12.4 Hz, *C*H_{2, Cy, C3}), 28.4 (d, ³*J*_{CP} = 11.0 Hz, *C*H_{2, Cy, C3}), 29.0 (*C*H_{2, Cy, C2}), 29.6 (*C*H_{2, Cy, C2}), 31.6 (*C*H3, *t*Bu), 32.9 (*C*H3, *t*Bu), 34.4 (d, ¹*J*_{CP} = 48.1 Hz, *C*H, _{Cy, C1}), 42.0 - 42.3 (m, *C*,_{*t*Bu}), 56.3 (d, ²*J*_{CP} = 2.4 Hz, *C*H_{2, C3H5}), 79.1 - 79.7 (m, *C*H_{2, C3H5}), 113.7 (CH, _{C3H5}) ppm. ³¹P {¹H} NMR (162 MHz, CD₂Cl₂) δ = 30.8 (d, ²*J*_{PP} = 63.4 Hz, *P*Cy₃), 58.0 (br, *Pt*Bu₂) ppm. CHNS: Berechnet: C: 58.58, H: 9.36. Gemessen: C: 58.85, H: 9.31.

### D) Palladium(0)-Komplexe und ihre oxidativen Additionsprodukte

Beispielhaft wird hier die Synthese des Palladium-Dibenzylidenaceton-Komplexes mit dem aus Beispiel 1.D) dargestellten Ylid-funktionalisierten Dicyclohexylphosphans mit On = PCy₃, R=R'=Cy und X = Me beschrieben. Analoge Palladium-Komplexe lassen sich über entsprechende Vorschriften mit allen anderen Phosphanliganden synthetisieren.

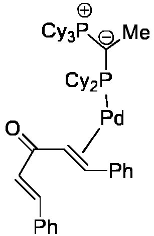

Ein *J*. *Young* NMR-Röhrchen wurde mit 30 mg (59 µmol) des Phosphans Y*_{Me}PCy₂ und 34 mg (59 µmol) Tris(Dibenzylidenaceton)-dipalladium(0) x Dibenzylidenaceton befüllt. Beide Feststoffe wurden in 0.6 ml deuteriertem THF suspendiert und für 30 Minuten geschüttelt. Die Reaktion wurde über NMR-Spektroskopie kontrolliert und nach Abschluss der Reaktion wurde das Produkt durch langsames Diffundieren von Pentan in die THF-Lösung kristallisiert. Das Produkt konnte in Form von roten Kristallen erhalten werden (45 mg; 53 µmol; 89%). Bei Verwendung eines Überschusses an Phosphanligand lässt sich auch der Bisphosphan-Palladium(0)-Komplex isolieren.

³¹P {¹H} NMR (162 MHz, THF-*d*₈) δ = 26.9 (d, ²*J*_{PP} = 82.1 Hz, *P*Cy₂), 31.6 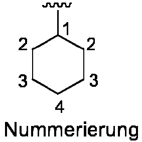 (d, ²*J*_{PP} = 82.1 Hz, *P*Cy₃). ¹H NMR (400 MHz, THF-d8) δ = 1.02 - 1.86 (m, 50H), 1.53 (dd, ²*J*_{HP} = 12.6 Hz, ²*J*_{HP} = 7.2 Hz, 3H), 1.87 - 2.06 (m, 2H, C*H*, _{PCy2, H1}), 2.09 - 2.32 (m, 3H, C*H*_{, PCy3, H1}), 5.97 - 6.17 (m, 2H, dba), 6.35 - 6.73 (m, 2H, dba), 7.10 - 7.31 (m, 8H, dba), 7.30 - 7.43 (m, 8H, dba), 7.49 - 7.63 (m, 4H, dba), 7.63 - 7.73 (m, 8H, dba), 7.73 - 7.79 (m, 2H, dba).

Beispielhaft wird hier die Synthese eines Palladium(II)-Arylchlorido-Komplexes mit dem aus Beispiel 1.D) dargestellten Ylid-funktionalisierten Dicyclohexylphosphans mit On = PCy₃, R=R'=Cy und X = Me beschrieben. Weitere Palladium(II)-Komplexe lassen sich analog mit allen anderen Phosphanliganden sowie mit weiteren Arylchloriden und -bromiden synthetisieren.

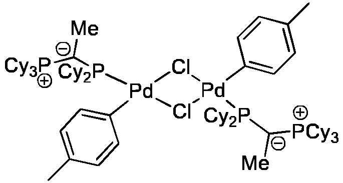

Phosphan Y*_{Me}PCy₂ (500 mg, 0.99 mmol, 1 eq.) und Bis(dibenzylidenaceton)-palladium(0) (742 mg, 1.09 mmol) wurden bei RT in 10 ml THF für 30 Minuten gerührt. Die Lösung wurde filtriert und 1 mL *p-*Chlortoluol zugegeben und die Lösung 48h gerührt. Der dunkelgelbe Niederschlag wurde abfiltriert und 3-mal mit 10 ml THF gewaschen. Nach Trocknen im Vakuum wurde das Produkt als dunkelgelber Feststoff erhalten (515 mg, 0.69 mmol, 70 %). Der Komplex erwies sich als unlöslich in allen üblichen Lösungsmitteln, außer DCM, in dem es sich jedoch langsam zersetzt.

³¹P {¹H} NMR (162 MHz, CD₂Cl₂) δ = 32.5 (d, ²*J*_{PP} = 49.6 Hz), 35.1 (d, ²*J*_{PP} = 49.6 Hz) ppm. ¹H NMR (400 MHz, CD₂Cl₂) δ = 0.95 - 2.08 (m, 52H, C*H* + C*H*_{2, PCy2 + PCy3}), 1.55 (dd, ³*J*_{HP} = 12.8 Hz, ³*J*_{HP} = 9.4 Hz, 3H, C*H*₃), 2.14 (s, 3H, C*H*_{3, Tolyl}), 2.57 (br, 3H, C*H*_{, PCy3, H1}), 6.68 (m, 2H, C*H*_{, Tolyl}), 7.08 (m, 2H, C*H*_{, Tolyl}) ppm.

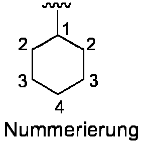

### Beispiel 3: Überganasmetall-katalysierte Umsetzungen mit Ylid-funktionalisierten Phosphanen

### A) Gold-katalysierte Hydroaminierung von Alkinen

Hierzu wurden die entsprechend der Vorschrift nach Beispiel 2.B) dargestellten Phosphangoldchlorid komplexe in einer 1:1-Mischung aus Alkin und Amin gelöst und mit einem Äquivalent Natrium-tetrakis[3,5-bis(trifluoromethyl)phenyl]borat versetzt. Das Gemisch wurde unter den in der nachfolgenden Tabelle aufgeführten Bedingungen zur Reaktion gebracht, wobei sich die folgenden Umsetzungen und Ausbeuten ergaben. Die Katalyse zeigte dabei kein Rückgang in Ausbeute unter wässrigen Bedingungen oder bei Aussetzen des Reaktionsgemisches gegenüber Luft.

**Tabelle 2: Gold(I)-katalysierte Hydroaminierung von Phenylacetylen mit Anilin und Ylid-funktionalisierten Phosphanen.**

| 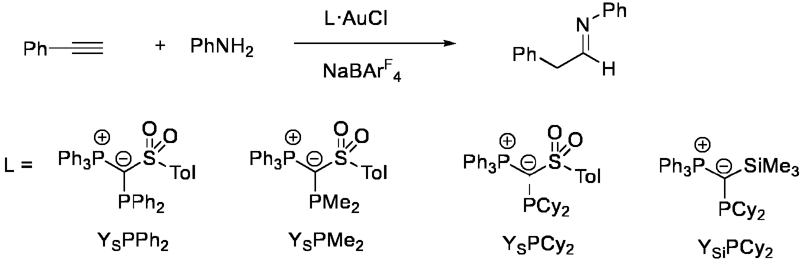 | | | | | |
|---|---|---|---|---|---|
| Ansatz | Katalysator L·AuCl; L = | Katalysatormenge [Mol%] | Reaktions -dauer [h] | Temp. [°C] | Ausbeute^{a} [%] |
| 1 | PPh₃ | 5 | 18 | RT | 20^{b} |
| 2 | Y_{S}PPh₂ | 5 | 0.25 | RT | 70 |
| 3 | Y_{S}PPh₂ | 1 | 0.25 | RT | 63 |
| 4 | Y_{S}PPh₂ | 1 | 6 | RT | 99 |
| 5 | Y_{S}PPh₂ | 0.1 | 2.5 | 50 | 66 |
| 6 | Y_{S}PPh₂ | 0.1 | 5 | 50 | 82 isoliert |
| 2 6 | Y_{S}PPh₂ | 0.1 | 14 | 50 | 94 |
| 7 | Y_{S}PPh₂ | 0.05 | 22 | 50 | 59 |
| 8 | Y_{S}PPh₂ | 0.01 | 22 | 50 | 28 |
| 6 | -^{[a]} | - | 24 | 50 | - |
| 7 | Y_{S}PMe₂ | 0.1 | 24 | 50 | 90 |
| 8 | Y_{S}PMe₂ | 0.05 | 24 | 50 | 76 |
| 9 | Y_{S}PCy₂ | 1 | 0.25 | RT | 98 |
| 10 | Y_{S}PCy₂ | 0.1 | 6 | RT | 61 |
| 11 | Y_{S}PCy₂ | 0.1 | 22 | RT | 94 |
| 12 | Y_{S}PCy₂ | 0.1 | 5 | 50 | 95 |
| 13 | Y_{S}PCy₂ | 0.05 | 5 | 50 | 89 |
| 14 | Y_{S}PCy₂ | 0.05 | 22 | 50 | 99 |
| 15 | Y_{S}PCy₂ | 0.025 | 22 | 50 | 91 |
| 16 | Y_{S}PCy₂ | 0.01 | 22 | 50 | 51 |
| 17 | Y_{S}PCy₂ | 0.01 | 48 | 50 | 74 |
| 18 | Y_{S}PCy₂ | 0.005 | 22 | 80 | 50 |
| 19 | Y_{S}PCy₂ | 0.005 | 48 | 80 | 62 |
| 20 | Y_{Si}PCy₂ | 0.1 | 2 | 50 | 97 |

| | | | | | |
|---|---|---|---|---|---|
| a) Die Ausbeute wurde mittels NMR-Spektroskopie bestimmt. b) D. Malhotra et al. Angew. Chem. Int. Ed. 53, 4456 (2014). | | | | | |

### B) Gold-katalysierte intramolekulare O-H-Addition an Alkine

Neben der Hydroaminierung lassen sich auch OH-Additionen an Alkine bewerkstelligen. 4-Pentinsäure regiert so in THF bei Raumtemperatur mit 0.5 mol% Y_{S}PCy₂·AuCl und einer äquimolaren Menge an Natrium-tetrakis[3,5-bis(trifluoromethyl)phenyl]borat innerhalb von 14 h vollständig zum gewünschten Lacton.

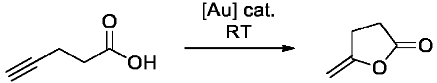

### C) Pd-katalysierte C-N-Kupplungsreaktion

Die C-N-Kupplungsreaktion von Aminen und Halogenaromaten wurden entsprechend bekannten Synthesevorschriften mit den jeweiligen Ylid-substituierten Phosphanen durchgeführt. Als Palladiumvorstufe wurde der kommerziell erhältliche Palladacyclus Di-µ-chlorobis[2'-(amino-N)[1,1'-biphenyl]-2-yl-C]dipalladium(II) verwendet und mit 1 Äquivalent des Phosphanliganden in THF umgesetzt. Unter Zugabe von Natriumtertbutanolat wurden das Amin und der Brom- bzw. Chloraromat zur Reaktion gebracht.

**Tabelle 3: C-N-Kupplung von Phenylanilin mit Arylbromiden und -chloriden mit dem Phosphanliganden Y_{Me}PCy₂.**

| 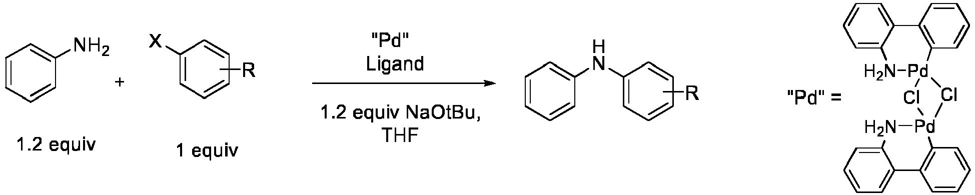 | | | | | | |
|---|---|---|---|---|---|---|
| Ansatz | Katalysator; Ligand = | Katalysatormenge [Mol%] | Arylhalide | Reaktionsdauer [h] | Temp. [°C] | Ausbeute^{a} [%] |
| 1 | Y_{Me}PCy₂ | 5 | 2-Bromotoluene | 16 | RT | 99 |
| 2 | Y_{Me}PCy₂ | 5 | 4-Chlorobenzonitrile | 16 | RT | 40 |
| 3 | Y_{Me}PCy₂ | 5 | 4-Chlorobenzonitrile | 16 | 60 | 95 |
| 4 | Y_{Me}PCy₂ | 2.5 | 4-Chlorotoluene | 18 | 100 | 17 |
| 5 | Y_{Me}PCy₂ | 2.5 | 4-Chlorotoluene | 48 | 100 | 39 |

| | | | | | | |
|---|---|---|---|---|---|---|
| a) Die Ausbeute wurde mittels NMR-Spektroskopie bestimmt. | | | | | | |

1.5-2.0 Äquivalente Kalium-tert-butanolat (oder Natrium-tert-butanolat) wurden in der Glovebox in ein Schraubdeckelgefäß gegeben. Außerhalb der Glovebox wurden das Arylchlorid (0.9-1.2 mmol) und 1.1 Äq. eines Amins sowie 2 mL Lösungsmittel zugegeben. In einem zweiten Gefäß wurde eine Katalysatorlösung (s.u.) vorbereitet und die entsprechende Menge an Katalysator zur Reaktion gegeben. Das Reaktionsgemisch wurde bei Raumtemperatur gerührt. Nach der in der Tabelle angegebenen Zeit wurde die Reaktion mit Wasser gequenched und das Produkt über Säulenchromatographie isoliert. Alternativ wurden Ausbeuten über NMR-Spektroskopie bestimmt. Im Fall von *p*-Fluorchorbenzol wurde α,α,α-Trifluortoluol, im Fall der Fluorfreien Chloraromaten wurde 1,3,5-Trimethoxybenzol als interner Standard verwendet. Zur Bestimmung nach definierten Reaktionszeiten wurden kleine Mengen der Reaktionslösung entnommen und mit wenig Wasser gequencht. Die organische Phase wurde abgenommen, filtriert und das Lösungsmittel entfernt. Der Rückstand wurde in CDCl₃ gelöst und der Umsatz durch das Verhältnis der Produktpeaks zum internen Standard bestimmt.

In analoger Weise können Arylbromide in den Kupplungsreaktionen eingesetzt werden.

### Katalysatorvorbereitung:

1) Der Ligand **L1** (bzw. **L2-L6**) und eine äquimolare Menge Bis(dibenzylidenaceton)palladium(0) (oder Pd(OAc)2) wurden in THF (oder Dioxan, oder Toluol; s. Tabelle) gelöst und 30 Minuten bei Raumtemperatur gerührt. Eine entsprechende Menge der Lösung wurde anschließend zum Reaktionsgefäß gegeben.
2) Die Prekatalysatoren **P1, P2, P4-P8** wurden in THF gelöst und 30 Minuten bei Raumtemperatur gerührt. Eine entsprechende Menge der Lösung wurde anschließend zum Reaktionsgefäß gegeben.
3) Die entsprechende Menge an Prekatalysator **P3** wurde direkt zur Reaktionslösung gegeben.

### Vergleich der katalytischen Aktivität der Liganden mit bekannten Ligandsystemen

| | | | | |
|---|---|---|---|---|
| 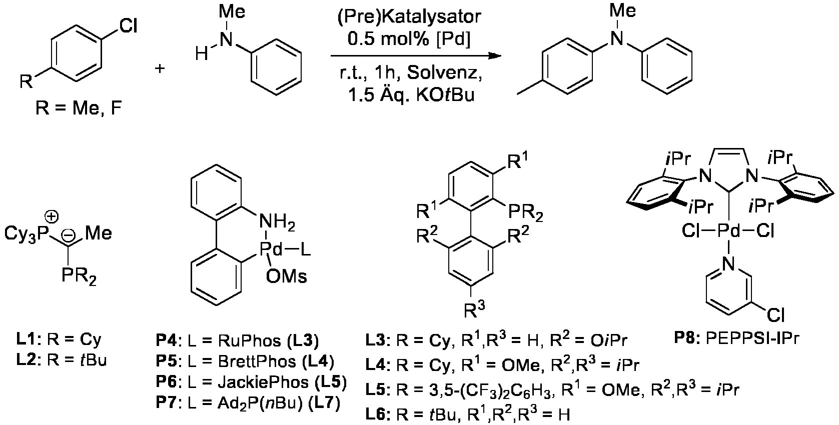 | | | | |

| R | (Pre)Katalysator | Base | Lösungsmittel | Ausbeute [%]^{[a]} |
|---|---|---|---|---|
| Me | **L1·**Pd₂dba₃ | KOtBu | THF | 95 |
| Me | **L1**·Pd₂dba₃ | NaOtBu | THF | 52 |
| Me | **L1**·Pd₂dba₃ | KOtBu | dioxane | 99 |
| F | **L1**·Pd₂dba₃ | KOtBu | THF | 83 |
| F | **L1**·Pd₂dba₃ | NaOtBu | THF | 45 |
| F | **L1**·Pd₂dba₃ | KOtBu | dioxane | 88 |
| F | **L1**·Pd(OAc)₂ | KOtBu | THF | 87 |
| F | **P4** oder **P5** oder **P6** oder **P7** oder **P8** | KOtBu | THF | <1 |
| F | **L3** oder **L4** oder **L5** mit Pd₂dba₃ | KOtBu | THF | <1 |
| F | **L6**·Pd(OAc)₂^{[b]} | NaOtBu | toluene | 10 (84)^{[c]} |
| F | **L1**·Pd(OAc)₂^{[b}} | NaOtBu | toluene | 78 (88)^{[c]} |

| | | | | |
|---|---|---|---|---|
| [a] Ausbeuten wurden mittels NMR-Spektroskopie bestimmt. [b] 1 mol% Ligand. [c] Nach 19 h. | | | | |

### Anwendung verschiedener Arylchloride mit P*_{Me}PCy₂ (L1) als Liganden

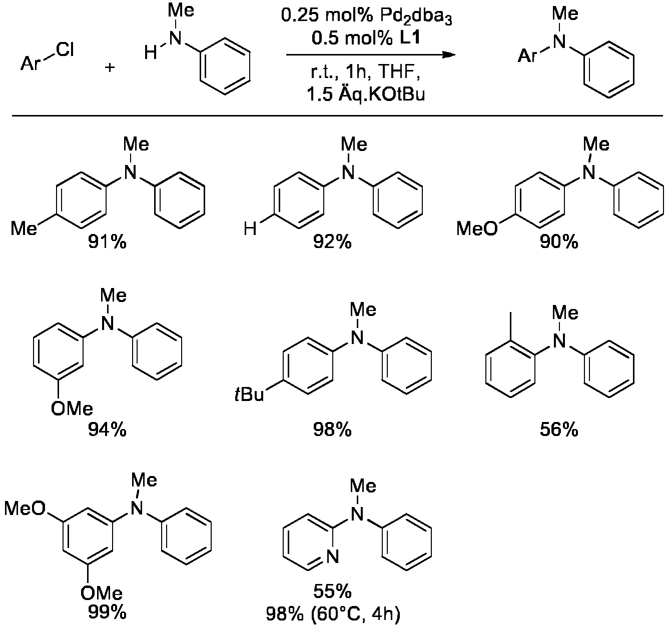

Ausbeuten sind isolierte Ausbeuten.

### Anwendung verschiedener Amine und Katalysatorsysteme basierend auf P*_{Me}PCy₂ (L1) und P*_{Me}PtBu₂ (L2)

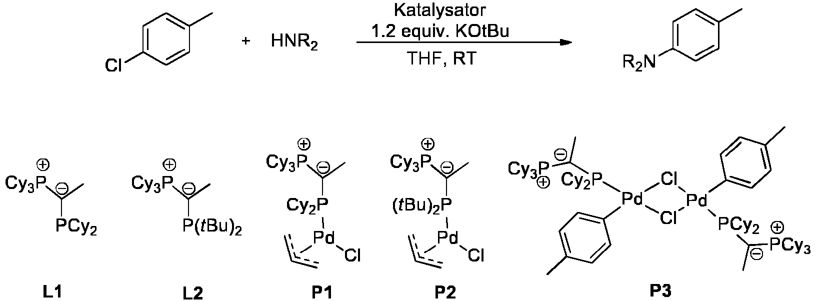

### Katalysator: L1·Pd₂dba₃

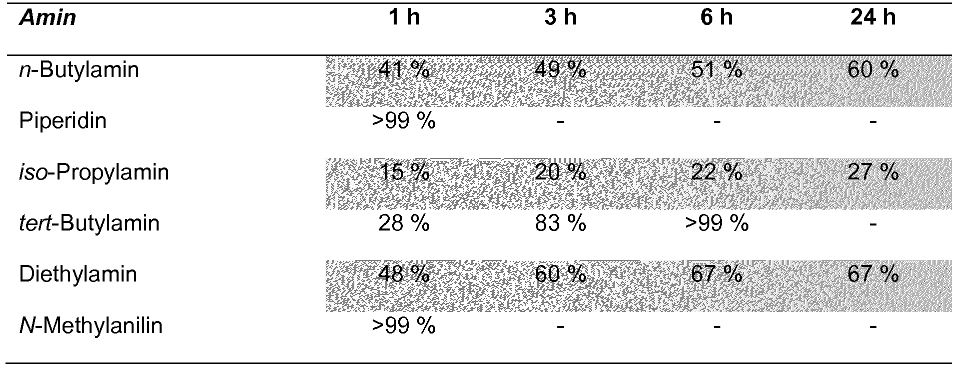

### Katalysator: L2·Pd₂dba₃

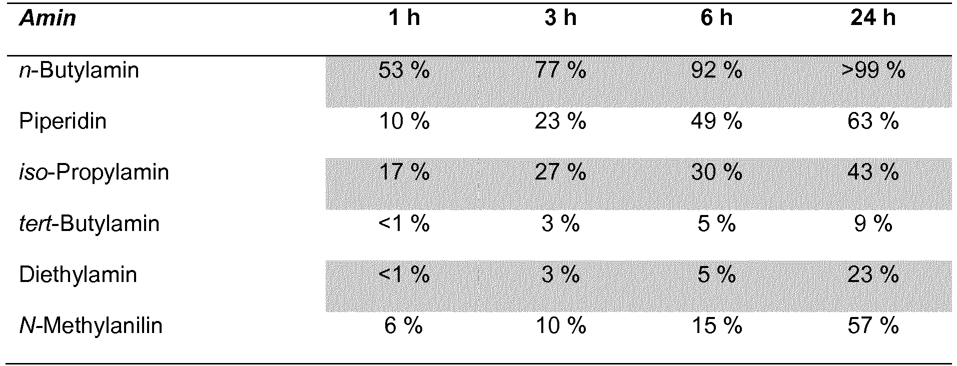

### Katalysator: P1

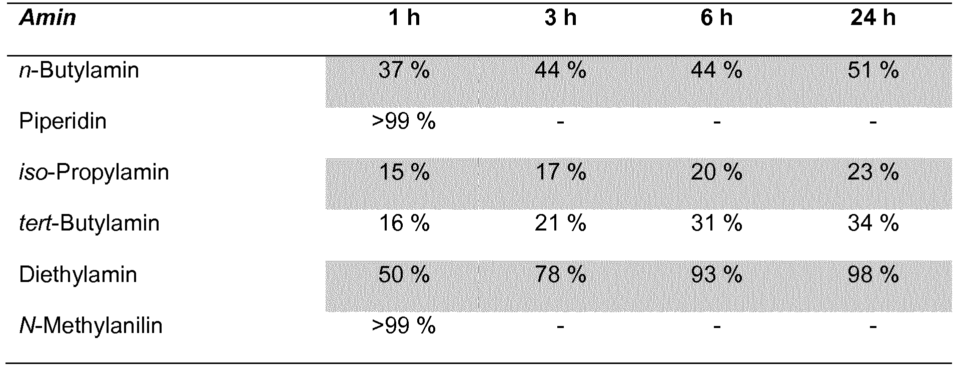

### Katalysator: P2

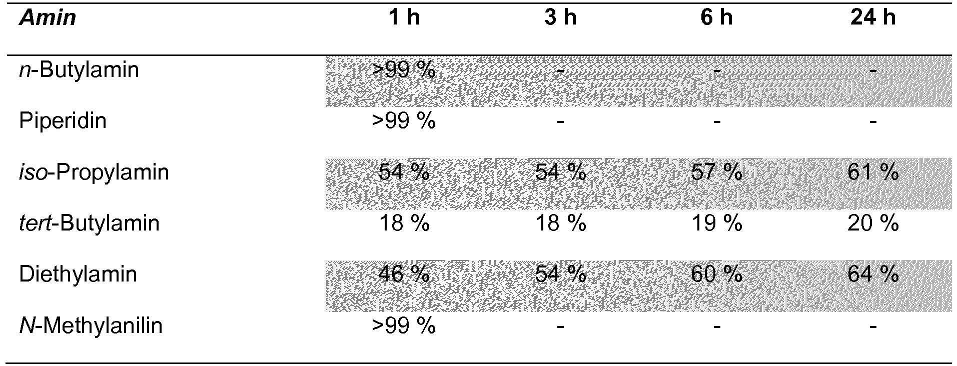

### Katalysator: P3

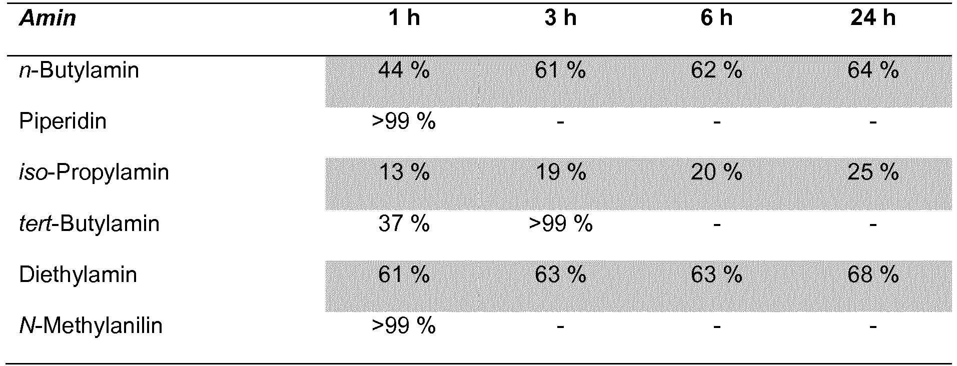

### D) Pd-katalysierte C-C-Kupplungsreaktion

Die C-C-Kupplungsreaktion von Boronsäure und Halogenaromaten wurden entsprechend bekannten Synthesevorschriften mit den jeweiligen Ylid-substituierten Phosphanen durchgeführt. Als Palladiumvorstufe wurde der kommerziell erhältliche Palladacyclus Di-µ-chlorobis[2'-(amino-N)[1,1'-biphenyl]-2-yl-C]dipalladium(II) verwendet und mit einem Äquivalent des Phosphanliganden in THF umgesetzt. Unter Zugabe von einer wässrigen Lösung von Kaliumphosphat wurden das Amin und der Brom- bzw. Chloraromat zur Reaktion gebracht.

**Tabelle 4: C-C-Kupplung von Phenylboronsäure mit Arylbromiden und -chloriden mit den Phosphanliganden Y_{Me}PCy₂ und Y_{S}PCy₂.**

| 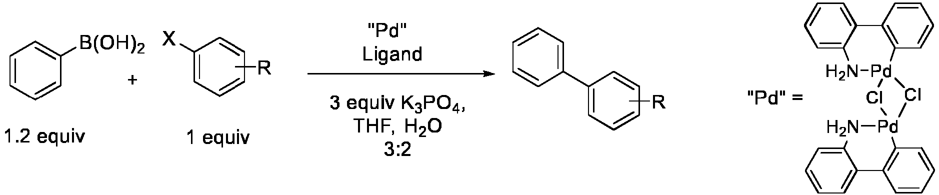 | | | | | | |
|---|---|---|---|---|---|---|
| Ansatz | Katalysator; Ligand = | Katalysatormenge [Mol%] | Arylhalide | Reaktions -dauer [h] | Temp. [°C] | Ausbeute^{a} [%] |
| 1 | Y_{S}PCy₂ | 2 | 2-Bromotoluene | 24 | RT | 60 |
| 2 | Y_{Me}PCy₂ | 2 | 2-Bromotoluene | 24 | RT | 16 |
| 3 | Y_{Me}PCy₂ | 5 | 2-Bromotoluene | 24 | 60 | 99 |
| 4 | Y_{Me}PCy₂ | 2 | 4-Bromo-acetophenone | 48 | RT | 84 |
| 5 | Y_{Me}PCy₂ | 5 | 4-Chlorotoluene | 24 | 60 | 27 |
| 6 | Y_{Me}PCy₂ | 5 | 4-Chloro-benzonitrile | 24 | 60 | 95 |

| | | | | | | |
|---|---|---|---|---|---|---|
| a) Die Ausbeute wurde mittels NMR-Spektroskopie bestimmt. | | | | | | |

### Heck-Reaktion mit YPhos

In ein Schlenkgefäß mit Rührstab wurde in einer Glovebox Kaliumcarbonat gegeben. 2ml trockenes DMF (Dimethylformamid), Arylhalogenid (**1**, 1 mmol) und Olefin (**2**, 1 mmol) wurden zugegeben.

Eine Stammlösung Katalysator und ligand wurden hergestellt durch Mischen von 0.2 mmol Palladiumacetat Pd(OAc)₂ und 0.2 mmol YPhos in einem Schlenkgefäß. 1 ml trockenes THF (Tetrahydrofuran) wurden zugegeben, für 30 min gerührt und 0.1 ml der so erhaltenen Lösung zum Reaktionsgemisch zugegeben und für 3 h bei 140 °C gerührt. Ausbeuten wurden durch F- NMR Analyse mit α,α,α-Trifluorotoluen als interner Standard bestimmt.

### YPhos:

| 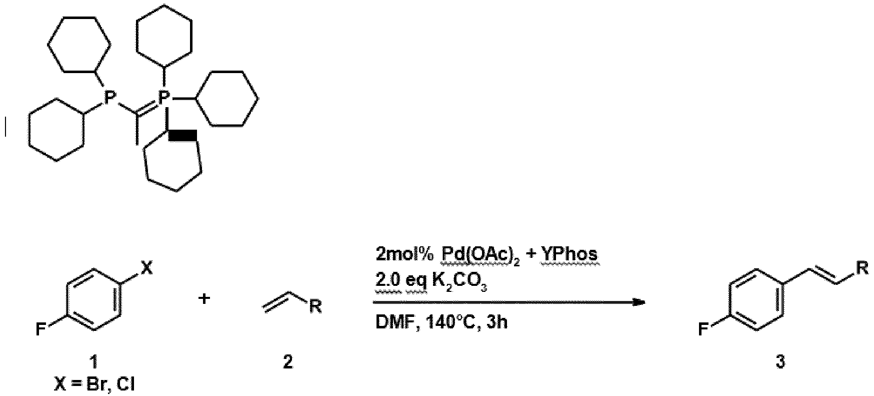 | | | |
|---|---|---|---|
| 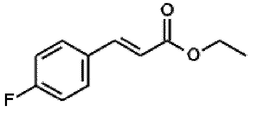 | **3a 22% (X=Br)** | 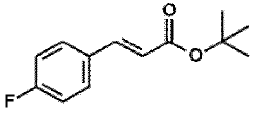 | **3b 22% (X=Br)** |
| | **0% (X=Cl)** | | |
| 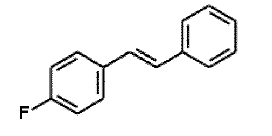 | **3c 0% (X=Br)** | 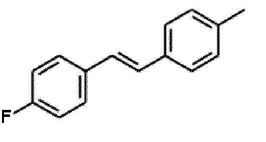 | **3d 0% (X=Br)** |

### Förderung

Für das diesem Antrag zugrundeliegende Projekt wurden Fördermittel des Europäischen Forschungsrats (ERC) im Rahmen des Programms der Europäischen Union für Forschung und Innovation "Horizont 2020" bereitgestellt (Finanzhilfevereinbarung Nr. 677749).

## Patentansprüche

1. Phosphanliganden der Formeln YPR¹ R² (I), Y₂PR¹ (II) und Y₃P (III) 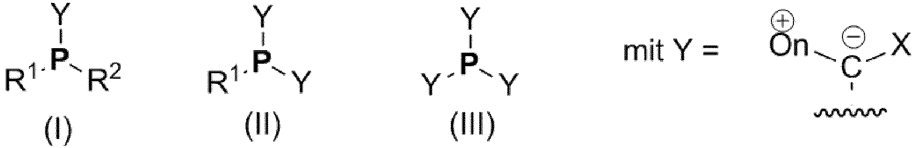 wobei
Y ein über das carbanionische Zentrum am Phosphoratom gebundener Ylid-Substituent darstellt, der Onium-Gruppen On und X-Gruppen aufweist,
On, unabhängig von den Onium-Gruppen in weiteren Ylid-Substituenten, ausgewählt ist aus Phosphoniumgruppen -P(R³R⁴R⁵), Ammoniumgruppen -N(R³R⁴R⁵), Sulfoxoniumgruppen -SOR³R⁴ und Sulfoniumgruppen -S(R³R⁴),
X, unabhängig von den X-Gruppen in weiteren Ylid-Substituenten, ausgewählt ist aus Wasserstoff, Alkyl-, Aryl-, Alkenyl- und Heteroarylgruppen, die unsubstituiert oder mit funktionellen Gruppen substituiert sein können, Silyl- (-SiR³R⁴R⁵), Sulfonyl- (-SO₂R³), Phosphoryl- (-P(O)R³R⁴, -P(S)R³R⁴, -P(NR³)R⁴R⁵₂), Cyano- (-CN), Alkoxy- (-OR³) und Aminogruppen (-NR³R⁴), und
R¹, R², R³, R⁴ und R⁵, soweit vorhanden, unabhängig voneinander ausgewählt sind aus Alkyl-, Aryl- und Heteroarylgruppen, die unsubstituiert oder mit funktionellen Gruppen substituiert sein können, unter der Voraussetzung, dass R¹ und R² von Methyl verschieden sind, wenn X Wasserstoff oder Trimethylsilyl ist und Z Trimethylphosphonium ist oder dass R¹ und R² von Phenyl verschieden sind, wenn X p-toluylsulfonyl (-SO₂(p-toluyl)) und Z Triphenylphosphonium ist.

2. Phosphanliganden nach Anspruch 1, wobei
(i) die Alkylgruppen ausgewählt sind aus geradkettigen, verzweigten oder zyklischen C₁₋₁₀ Alkylgruppen, vorzugsweise aus C₁₋₆ Alkylgruppen oder C₄₋₁₀ Cycloalkylgruppen, die Arylgruppen ausgewählt sind aus C₆₋₁₄ Arylgruppen, vorzugsweise aus C₆₋₁₀ Arylgruppen, die Alkenylgruppen ausgewählt sind aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, und/oder
(ii) die funktionelle Gruppen ausgewählt sind aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.

3. Phosphanliganden nach Anspruch 1 oder 2, die die Formel (I) oder (II) 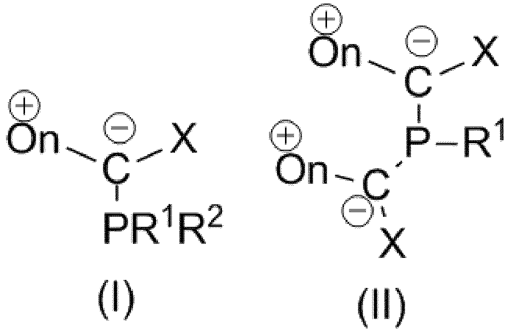 aufweisen, wobei On eine Phosphoniumgruppe -P(R³R⁴R⁵) wobei R³, R⁴ und R⁵ unabhängig voneinander ausgewählt sind aus der Gruppe bestehend aus C₁₋₆ Alkylgruppen, C₄₋₁₀ Cycloalkylgruppen, C₆₋₁₀ Arylgruppen, X ausgewählt ist aus der Gruppe bestehend aus geradkettigen, verzweigten oder zyklischen C₁₋₆ Alkylgruppen, C₆₋₁₀ Arylgruppen, einfach- oder mehrfach ungesättigten, geradkettigen, verzweigten oder zyklischen C₂₋₆ Alkenylgruppen, eine Trialkylsilyl- (-SiR³R⁴R⁵), Arylsulfonylgruppe (R¹²-SO₂R³) und R¹ und R² C₆₋₁₀ Arylgruppen oder C₁₋₆ Alkyl- und Cycloalkylgruppen sind.

4. Phosphanliganden nach einem oder mehreren der vorstehenden Ansprüche, wobei R³, R⁴ und R⁵ unabhängig voneinander ausgewählt sind aus der Gruppe bestehend aus Methyl, Ethyl, Butyl, Cyclohexyl, Phenyl und deren Kombinationen.

5. Phosphanliganden nach einem oder mehreren der vorstehenden Ansprüche, wobei R³, R⁴ und R⁵ gleich sind und ausgewählt aus der Gruppe bestehend aus Methyl, Ethyl, Butyl, Cyclohexyl, Phenyl und deren Kombinationen, insbesondere Cyclohexyl und Phenyl.

6. Phosphanliganden nach einem oder mehreren der vorstehenden Ansprüche, wobei X ausgewählt ist aus der Gruppe bestehend aus Methyl, Ethyl, Cyclohexyl, Phenyl, p-Tolyl, Trimethylsilyl-, p-Tolylsulfonyl oder deren Kombinationen.

7. Phosphanliganden nach einem oder mehreren der vorstehenden Ansprüche, wobei R¹ und R² unabhängig voneinander ausgewählt sind aus der Gruppe bestehend aus Phenyl, Cyclohexyl, Methyl und deren Kombinationen.

8. Verfahren zur Herstellung der Phosphanliganden gemäß einem der Ansprüche 1 bis 3, umfassend
(a) die Umsetzung eines metallierten Ylids mit einem Halogenphosphan, einem Dihalogenphosphan oder Phosphortrichlorid;
(b) die Umsetzung eines Ylid-funktionalisierten Halogenphosphans oder Dihalogenphosphans mit einem metallorganischen Reagenz;
(c) die Phosphanylierung eines Oniumsalzes Phosphanylierung mit Halogenphosphanen in Gegenwart einer Base; oder
(d) die Deprotonierung eines α-Phosphanyl-substituierten Oniumsalzes mit einer Base.

9. Verwendung der Phosphanliganden nach einem der Ansprüche 1 bis 3 in der Synthese von Metallkomplexen oder Metallsalzen.

10. Verwendung nach Anspruch 9, wobei die Metallkomplexe oder Metallsalze Edelmetall- oder Übergangsmetallkomplexe bzw. Edelmetall- oder Übergangsmetallverbindungen sind.

11. Verwendung nach Anspruch 9 oder 10, wobei die Metall-, Edelmetall- oder Übergangsmetallkomplexe und -salze mit den Phosphanliganden gemäß einem der Ansprüche 1 bis 7 in der homogenen Katalyse eingesetzt werden.

12. Verwendung der Phosphanliganden nach einem der Ansprüche 1 bis 7 in Kombination mit Metall-, Edelmetall- oder Übergangsmetallkomplexen oder Metall-, Edelmetall- oder Übergangsmetallsalzen als Katalysatoren, wobei die Liganden *in situ* zu den Metall-, Edelmetall- oder Übergangsmetallprecursorverbindungen gegeben oder die isolierten Metall-, Edelmetall- oder Übergangsmetallkomplexe der Phosphanliganden gemäß einem oder mehreren der Ansprüche 9-11 eingesetzt werden.

13. Verwendung nach Anspruch 9 bis 12, wobei die Metalle Platin, Palladium und Nickel, bevorzugt Palladium, verwendet werden.

14. Verwendung nach Anspruch 9 bis 13, wobei die Metalle Kupfer, Silber und Gold, bevorzugt Gold, verwendet werden.

15. Verwendung nach Anspruch 9 bis 14, wobei die Liganden
(i) in katalytischen Hydrofunktionalisierungsreaktionen von Alkinen und Alkenen;
(ii) in katalytischen Hydroaminierungsreaktionen von Alkinen und Alkenen;
(iii) in katalytischen O-H-Additionsreaktionen an Alkinen und Alkenen;
(iv) in katalytischen Kupplungsreaktionen;
(v) in katalytischen Suzuki-Kupplungsreaktionen, insbesondere für die Darstellung von Biarylen;
(vi) in katalytischen Kreuz-Kupplungsreaktionen, insbesondere C-N und C-O-Kupplungsreaktionen; und/oder
(vii) in katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen;
eingesetzt werden.

16. Metallkomplexe enthaltend einen Phosphanliganden der Formeln YPR¹ R² (I), Y₂PR¹ (II) und Y₃P (III) 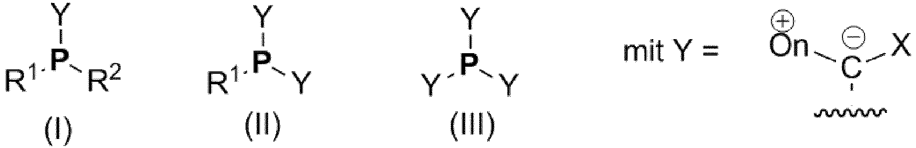 wobei
Y ein über das carbanionische Zentrum am Phosphoratom gebundener Ylid-Substituent darstellt, der Onium-Gruppen On und X-Gruppen aufweist,
On, unabhängig von den Onium-Gruppen in weiteren Ylid-Substituenten, ausgewählt ist aus Phosphoniumgruppen -P(R³R⁴R⁵), Ammoniumgruppen -N(R³R⁴R⁵), Sulfoxoniumgruppen -SOR³R⁴ und Sulfoniumgruppen -S(R³R⁴),
X, unabhängig von den X-Gruppen in weiteren Ylid-Substituenten, ausgewählt ist aus Wasserstoff, Alkyl-, Aryl-, Alkenyl- und Heteroarylgruppen, die unsubstituiert oder mit funktionellen Gruppen substituiert sein können, Silyl- (-SiR³₃), Sulfonyl- (-SO₂R³), Phosphoryl- (-P(O)R³R⁴, -P(S)R³R⁴, -P(NR³)R⁴R⁵₂), Cyano- (-CN), Alkoxy- (-OR) und Aminogruppen (-NR₂), und
R¹, R², R³, R⁴ und R⁵, soweit vorhanden, unabhängig voneinander ausgewählt sind aus Alkyl-, Aryl- und Heteroarylgruppen, die unsubstituiert oder mit funktionellen Gruppen substituiert sein können.

17. Metallkomplexe nach Anspruch 16, wobei (i) die Alkylgruppen ausgewählt sind aus geradkettigen, verzweigten oder zyklischen C₁₋₁₀ Alkylgruppen, vorzugsweise aus C₁₋₆ Alkylgruppen oder C₄₋₁₀ Cycloalkylgruppen, die Arylgruppen ausgewählt sind aus C₆₋₁₄ Arylgruppen, vorzugsweise aus C₆₋₁₀ Arylgruppen, die Alkenylgruppen ausgewählt sind aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, und/oder
(ii) die funktionelle Gruppen ausgewählt sind aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.

18. Metallkomplexe nach Anspruch 16 oder 17, wobei Phosphanliganden der Formeln (I) oder (II) 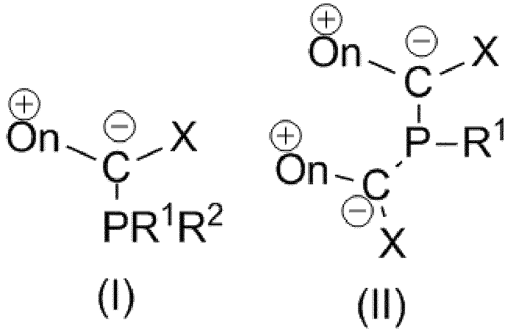 aufweisen, wobei On eine Phosphoniumgruppe -P(R³R⁴R⁵) wobei R³, R⁴ und R⁵ unabhängig voneinander ausgewählt sind aus der Gruppe bestehend aus C₁₋₆ Alkylgruppen, C₄₋₁₀ Cycloalkylgruppen, C₆₋₁₀ Arylgruppen, X ausgewählt ist aus der Gruppe bestehend aus geradkettigen, verzweigten oder zyklischen C₁₋₆ Alkylgruppen, C₆₋₁₀ Arylgruppen, einfach- oder mehrfach ungesättigten, geradkettigen, verzweigten oder zyklischen C₂₋₆ Alkenylgruppen, eine Trialkylsilyl- (-SiR³R⁴R⁵), Arylsulfonylgruppe (R¹²-SO₂R³) und R¹ und R² C₆₋₁₀ Arylgruppen oder C₁₋₆ Alkyl- - und Cycloalkylgruppen.

19. Metallkomplexe nach einem oder mehreren der vorstehenden Ansprüche, wobei R³, R⁴ und R⁵ unabhängig voneinander ausgewählt sind aus der Gruppe bestehend aus Methyl, Ethyl, Butyl, Cyclohexyl, Phenyl und deren Kombinationen.

20. Metallkomplexe nach einem oder mehreren der vorstehenden Ansprüche, wobei R³, R⁴ und R⁵ gleich sind und ausgewählt aus der Gruppe bestehend aus Methyl, Ethyl, Butyl, Cyclohexyl, Phenyl und deren Kombinationen, insbesondere Cyclohexyl und Phenyl.

21. Metallkomplexe nach einem oder mehreren der vorstehenden Ansprüche, wobei X ausgewählt ist aus der Gruppe bestehend aus Methyl, Ethyl, Cyclohexyl, Phenyl, p-Tolyl, Trimethylsilyl-, p-Tolylsulfonyl oder deren Kombinationen.

22. Metallkomplexe nach einem oder mehreren der vorstehenden Ansprüche, wobei R¹ und R² unabhängig voneinander ausgewählt sind aus der Gruppe bestehend aus Phenyl, Cyclohexyl, Methyl, Tert.-Butyl und deren Kombinationen.

23. Metallkomplexe nach Anspruch 18 bis 22, wobei der Komplex ein Palladium-allyl-Komplex der folgenden Struktur (V) oder ein Palladium-Arylkomplex der Struktur (VI) ist: 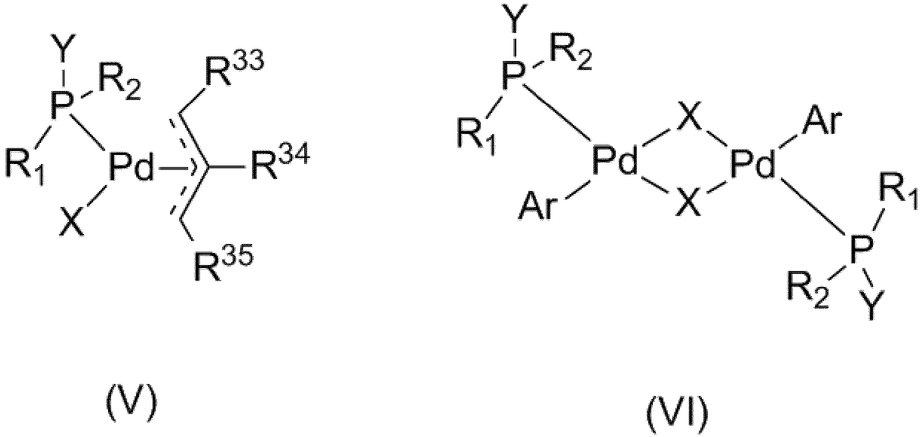
wobei X ein Anion ist,
Y, R¹, R², wie in den vorstehenden Ansprüchen definiert sind,
R³³, R³⁴ und R³⁵, unabhängig voneinander ausgewählt sind aus H, Alkyl-, Aryl- und Heteroarylgruppen, die unsubstituiert oder mit funktionellen Gruppen substituiert sein können; oder mindestens zwei von R³³, R³⁴ und R³⁵ einen carbocyclischen Ring mit 5 bis 14 Kohlenstoffatomen bilden können,
Ar eine substituierte oder unsubstituierte, insbesondere eine substituierte Aryl-Gruppe darstellt.

24. Metallkomplexe nach Anspruch 23, wobei R³³, R³⁴ und R³⁵, unabhängig voneinander ausgewählt sind aus geradkettigen, verzweigten oder zyklischen C₁₋₁₀ Alkylgruppen, vorzugsweise aus C₁₋₆ Alkylgruppen oder C₄₋₁₀ Cycloalkylgruppen, die Arylgruppen ausgewählt sind aus C₆₋₁₄ Arylgruppen, vorzugsweise aus C₆₋₁₀ Arylgruppen, die Alkenylgruppen ausgewählt sind aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, wobei die vorgenannten Gruppen alle mit funktionellen Gruppen substituiert sein können und/oder
mindestens zwei von R³³, R³⁴ und R³⁵ einen carbocyclischen Ring bilden, der eine C₄₋₁₀ Cycloalkylgruppe oder eine C₆₋₁₄ Arylgruppe ist, die mir einer oder mehreren funktionellen Gruppen substituiert sein können, und
Ar ausgewählt sind aus C₆₋₁₄ Arylgruppen, vorzugsweise aus C₆₋₁₀ Arylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, wobei die vorgenannten Gruppen alle mit funktionellen Gruppen substituiert sein können, und
die funktionelle Gruppen ausgewählt sind aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.

25. Metallkomplexe nach Anspruch 23 oder 24, wobei X ausgewählt ist aus der Gruppe Halogen, Tosylat, Nosylat und Mesylat.

26. Metallkomplexe nach einem oder mehreren der vorstehenden Ansprüche, wobei X ausgewählt ist aus der Gruppe Fluor, Chlor, Brom, Iod, Tosylat, Nosylat und Mesylat und/oder Aryl ausgewählt ist aus Phenyl, m-Tolyl, p-Tolyl, o-Tolyl, Mesityl, 1,3-Diisopropylphenyl.

27. Verfahren zur Durchführung einer Kupplungsreaktion enthaltend die Schritte
- Bereitstellen eines Reaktionsgemischs enthaltend mindestens Substrat, Kupplungspartner sowie einen Metallkomplex nach Anspruch 16 bis 26 oder einen Metallkomplex enthaltend einen Liganden nach Anspruch 1; und
- Reagieren von Substrat mit dem Kupplungspartner in der Gegenwart des Metallkomplexes oder dessen Derivat, so dass ein Kupplungsprodukt entsteht.

28. Verfahren nach Anspruch 27, wobei das Metall des Metallkomplexes ein Edelmetall und/oder ein Übergangsmetall ist.

29. Verfahren nach Anspruch 27 oder 28, wobei das Metall des Metallkomplexes ein Metall der Gruppe 10 oder 11 des Periodensystems der Elemente ist.

30. Verfahren nach einem oder mehrerer Ansprüche 27 bis 29, wobei das Metall des Metallkomplexes ausgewählt ist aus der Gruppe bestehend aus Kupfer, Silber, Gold, Platin, Palladium, Nickel und deren Kombinationen ist.

31. Verfahren nach einem oder mehrerer Ansprüche 27 bis 30, wobei das Substrat eine substituierte aromatische Verbindung ist.

32. Verfahren nach Anspruch 31, wobei die substituierte aromatische Verbindung eine aromatische oder heteroaromatische Verbindung ist.

33. Verfahren nach Anspruch 31 oder 32, wobei die substituierte aromatische Verbindung substituiert ist mit einer Abgangsgruppe oder einer ungesättigten aliphatischen Gruppe oder einer Abgangsgruppe.

34. Verfahren nach Anspruch 33, wobei die Abgangsgruppe ausgewählt ist aus der Gruppe bestehend aus Halogen, Tosylat, Nosylat und Mesylat und/oder die ungesättigte aliphatische Gruppe ausgewählt ist aus der Gruppe bestehend aus Alken, oder Alkin, insbesondere mit 2 bis 12, insbesondere 2 bis 8 Kohlenstoffatomen.

35. Verfahren nach einem oder mehreren der vorstehenden Ansprüche, wobei der Kupplungspartner eine organometallische Verbindung umfasst.

36. Verfahren nach Anspruch 35, wobei die organometallische Verbindung ausgewählt ist aus der Gruppe bestehend aus organische Borverbindungen, organische Lithiumverbindungen, organische Zinkverbindungen, organische Lithiumverbindungen und Grignardverbindungen.

37. Verfahren nach Anspruch 35 oder 36, wobei die organometallische Verbindung mindestens einen aromatischen Rest umfasst.

38. Verfahren nach Anspruch 36, wobei die organometallische Verbindung mindestens einen ungesättigten aliphatischen Rest umfasst.

39. Verfahren nach Anspruch 36, wobei die organometallische Verbindung mindestens einen gesättigten aliphatischen Rest umfasst.

40. Verfahren nach einem oder mehrerer Ansprüche 27 bis 39, wobei die Kopplungsreaktion ausgewählt ist aus der Gruppe bestehend aus (i) katalytischen Hydrofunktionalisierungsreaktionen von Alkinen und Alkenen;
(ii) katalytischen Hydroaminierungsreaktionen von Alkinen und Alkenen;
(iii) katalytischen O-H-Additionsreaktionen an Alkinen und Alkenen;
(iv) katalytischen Kupplungsreaktionen;
(v) katalytischen Suzuki-Kupplungsreaktionen, insbesondere für die Darstellung von Biarylen;
(vi) katalytischen Kreuz-Kupplungsreaktionen, insbesondere C-N und C-O-Kupplungsreaktionen; und/oder
(vii) katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen.
